# EUROPEAN PATENT APPLICATION

(11) **EP 4 486 014 A1**
(43) Date of publication of application: **01.01.2025**
(21) Application number: 22927754.6
(22) Date of filing: 25.02.2022
(51) Int. Cl.: H04W 52/02

(54) **INFORMATION TRANSMISSION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: RGTH
(86) International application number: PCT/CN2022/077914
(87) International publication number: WO 2023/159468

(57) **Abstract**

The present application relates to an information transmission method, a terminal device, a network device, a computer-readable storage medium, a computer program product, and a computer program. The method includes: monitoring, by a terminal device, a wake-up signal (WUS) on a time-frequency resource of the WUS; where information related to the time-frequency resource of the WUS is configured by a network device.

## Description

### TECHNICAL FIELD

The present application relates to the field of communication, and more specifically, to an information transmission method, a terminal device, a network device, a computer-readable storage medium, a computer program product, and a computer program.

### BACKGROUND

With the development of technologies, there is also a greater focus on energy saving in a terminal device. Therefore, a method of using a receiver with lower power consumption for the terminal device is proposed, and in this method, a main receiver of the terminal device may be woken up by a WUS (wake-up signal) according to actual requirements, for relevant processes. However, how to ensure that the WUS is more flexibly applicable to more scenarios while ensuring the energy saving of the energy savingterminal device, has become a problem that needs to be solved.

### SUMMARY

Embodiments of the present application provide an information transmission method, a terminal device, a network device, a computer-readable storage medium, a computer program product, and a computer program.

The embodiments of the present application provide an information transmission method, including:
monitoring, by a terminal device, a wake-up signal (WUS) on a time-frequency resource of the WUS;
where information related to the time-frequency resource of the WUS is configured by a network device.

The embodiments of the present application provide an information transmission method, including:
transmitting, by a network device, a wake-up signal (WUS) to a terminal device on a time-frequency resource of the WUS;
where information related to the time-frequency resource of the WUS is configured by the network device to the terminal device.

The embodiments of the present application provide a terminal device, including:
a first communication unit, configured to monitor a wake-up signal (WUS) on a time-frequency resource of the WUS;
where information related to the time-frequency resource of the WUS is configured by a network device.

The embodiments of the present application provide a network device, including:
a second communication unit, configured to transmit a wake-up signal (WUS) to a terminal device on a time-frequency resource of the WUS;
where information related to the time-frequency resource of the WUS is configured by the network device to the terminal device.

The embodiments of the present application provide a terminal device, including a processor and a memory. The memory is configured to store a computer program, and the processor is configured to invoke and execute the computer program stored in the memory, to cause the terminal device to perform the above method.

The embodiments of the present application provide a network device, including a processor and a memory. The memory is configured to store a computer program, and the processor is configured to invoke and execute the computer program stored in the memory, to cause the terminal device to perform the above method.

The embodiments of the present application provide a chip, configured to implement the above methods.

Specifically, the chip includes: a processor, configured to invoke and execute a computer program from a memory, to cause a device equipped with the chip to perform the above methods.

The embodiments of the present application provide a computer-readable storage medium for storing a computer program, and the computer program, when executed by a device, causes the device to perform the above methods.

The embodiments of the present application provide a computer program product, which includes a computer program instruction, and the computer program instruction causes a computer to perform the above methods.

The embodiments of the present application provide a computer program, and the computer program, when executed on a computer, causes the computer to perform the above methods.

In the embodiments of the present application, the terminal device may monitor a WUS on a time-frequency resource of the WUS, and the information related to the time-frequency resource of the WUS is configured by the network device. By configuring the information related to the time-frequency resource of the WUS, the terminal device may perform monitoring on the WUS in a specified time domain and/or frequency domain position, thereby achieving a more flexible configuration for the WUS, and at the same time, ensuring the energy saving of the terminal device.

### BRIEF DESCRIPTION OF THE DRAWINGS

FIG. 1 is a schematic diagram of an application scenario according to the embodiments of the present application.
FIG. 2 is a schematic diagram of a scenario according to a processing method for introducing an energy-saving signal in DRX.
FIG. 3 is a schematic diagram of a scenario according to waking up a terminal device with an energy-saving signal to receive a paging message.
FIG. 4 is a schematic flowchart of an information transmission method according to an embodiment of the present application.
FIG. 5 is a schematic diagram of components of a terminal device according to an embodiment of the present application.
FIG. 6a to FIG. 6c are schematic diagrams of three scenarios in which a WUS is located within an initial downlink BWP according to an embodiment of the present application.
FIG. 7a to FIG. 7b are schematic diagrams of two scenarios in which a WUS is located within an initial downlink BWP and a position of a transmission bandwidth of the WUS is determined based on a first frequency offset according to an embodiment of the present application.
FIG. 8a to FIG. 8c are schematic diagrams of three scenarios in which a WUS is located outside an initial downlink BWP and a position of a transmission bandwidth of the WUS is determined based on a second frequency offset based on an embodiment of the present application.
FIG. 9a to FIG. 9b are schematic diagrams of two scenarios in which a position of a transmission bandwidth of a WUS is determined based on a third frequency offset and a first reference frequency point according to an embodiment of the present application.
FIG. 10 is another schematic flowchart of an information transmission method according to an embodiment of the present application.
FIG. 11 is a schematic block diagram of a terminal device according to an embodiment of the present application.
FIG. 12 is another schematic block diagram of a terminal device according to an embodiment of the present application.
FIG. 13 is a schematic block diagram of a network device according to an embodiment of the present application.
FIG. 14 is a schematic block diagram of a communication device according to the embodiments of the present application.
FIG. 15 is a schematic block diagram of a chip according to the embodiments of the present application.
FIG. 16 is a schematic block diagram of a communication system according to the embodiments of the present application.

### DETAILED DESCRIPTION

The technical solutions in the embodiments of the present application will be described below in conjunction with the drawings in the embodiments of the present application.

The technical solutions of the embodiments of the present application may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial communication Network (Non-Terrestrial Networks, NTN) system, a Universal Mobile Telecommunication System (UMTS), a Wireless Local Area Network (WLAN), a Wireless Fidelity (WiFi), a fifth-generation communication (5th-Generation, 5G) system, or other communication systems, etc.

Generally speaking, a number of connections supported by a traditional communication system is limited and is easy to implement, however, with the development of the communication technology, the mobile communication system will not only support the traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc, and the embodiments of the present application may also be applied to these communication systems.

In a possible implementation, the communication system in the embodiments of the present application may be applied to a carrier aggregation (CA) scenario, may also be applied to a dual connectivity (DC) scenario, and may also be applied to a standalone (SA) network deployment scenario.

In a possible implementation, the communication system in the embodiments of the present application may be applied to an unlicensed spectrum, where the unlicensed spectrum may also be considered as a shared spectrum; or the communication system in the embodiments of the present application may also be applied to a licensed spectrum, where the licensed spectrum may also be considered as an unshared spectrum.

The embodiments of the present application describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc.

The terminal device may be a station (STAION, ST) in the WLAN, may be a cellular phone, a cordless phone, a Session Initiation Protocol (SIP) phone, a Wireless Local Loop (WLL) station, or a personal digital processing (Personal Digital Assistant, PDA) device, a handheld device with a wireless communication function, a computing device or other processing devices connected to a wireless modem, a vehicle-mounted device, a wearable device, a terminal device in a next generation communication system such as in an NR network, or a terminal device in a Public Land Mobile Network (PLMN) network evolved in the future, etc.

In the embodiments of the present application, the terminal device may be deployed on land, which includes indoor or outdoor, in handheld, worn or vehicle-mounted; may also be deployed on water (e.g., on a ship, etc.); may also be deployed in the air (e.g., on an airplane, a balloon, a satellite, etc.).

In the embodiments of the present application, the terminal device may be a mobile phone, a pad, a computer with a wireless transceiving function, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, etc.

As an example but not a limitation, in the embodiments of the present application, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes for example, a smartwatch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

In the embodiments of the application, the network device may be a device used for communicating with a mobile device. The network device may be an Access Point (AP) in the WLAN, a base station (Base Transceiver Station, BTS) in the GSM or CDMA, may also be a base station (NodeB, NB) in the WCDMA, or may also be an evolutionary base station (Evolutionary Node B, eNB or eNodeB) in the LTE, or a relay station or an access point, or a vehicle-mounted device, a wearable device, and a network device or a base station (gNB) in an NR network, or a network device in the PLMN network evolved in the future or a network device in the NTN network, etc.

As an example but not a limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station provided on land, water, and other places.

In the embodiments of the present application, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell, and the small cell here may include: a metro cell, a micro cell, a pico cell, a femto cell, etc, these small cells have characteristics of small coverage range and low transmission power, which are applicable for providing a data transmission service with high speed.

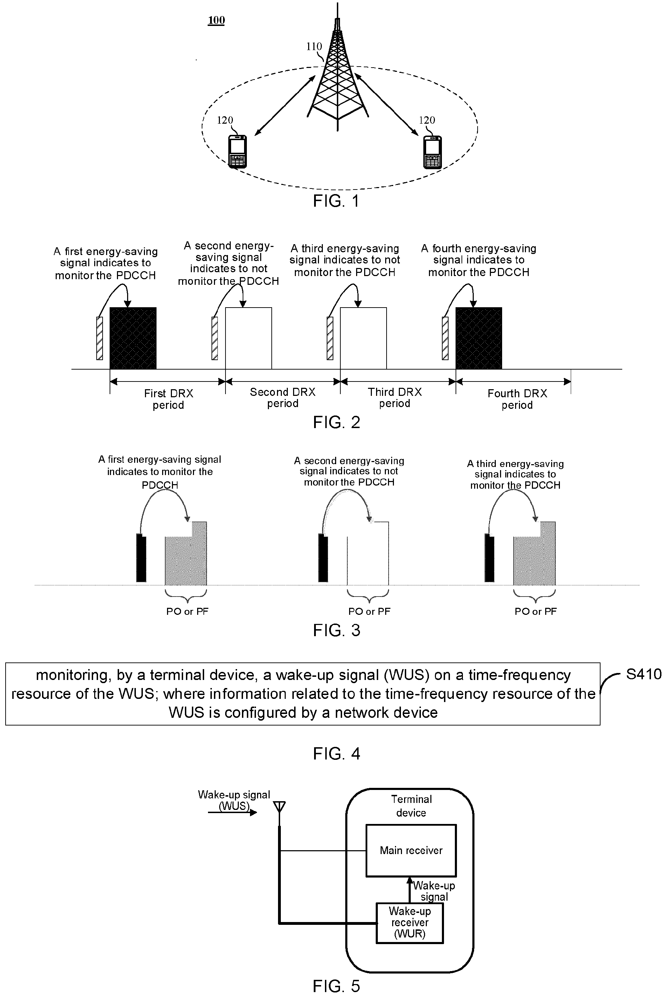

FIG. 1 exemplarily shows a communication system 100. The communication system includes one network device 110 and two terminal devices 120. In a possible implementation, the communication system 100 may include multiple network devices 110, and other numbers of terminal devices 120 may be included within a coverage range of each network device 110, which is not limited by the embodiments of the present application.

In a possible implementation, the communication system 100 may also include other network entities such as a mobility management entity (MME), and an access and mobility management function (AMF), etc., which is not limited by the embodiments of the present application.

Herein, the network device may also include an access network device and a core network device. That is, the wireless communication system also includes multiple core networks for communicating with the access network device. The access network device may be an evolutional base station (evolutional node B, referred to as eNB or e-NodeB for short), a macro base station, a micro base station (also referred to as a "small base station"), a pico base station, an access point (AP), a transmission point (TP) or a new generation base station (new generation Node B, gNodeB), etc., in a long-term evolution (LTE) system, a next-generation (mobile communication system) (next radio, NR) system or an authorized auxiliary access long-term evolution (LAA-LTE) system.

It should be understood that in the embodiments of the present application, a device with a communication function in the network/system may be referred to as a communication device. Taking the communication system shown in FIG. 1 as an example, the communication device may include a network device and a terminal device with the communication function. The network device and the terminal device may be specific devices in the embodiments of the present application, which will not be repeated herein. The communication device may also include other devices in the communication system, such as a network controller, a mobility management entity, and other network entities, which is not limited by the embodiments of the present application.

To facilitate the understanding of the embodiments of the present application, basic processes and basic concepts involved in the embodiments of the present application are briefly described below. It should be understood that the basic processes and basic concepts introduced below do not limit the embodiments of the present application.

The main application scenarios of 5G are: enhanced mobile ultra broadband (Enhanced Mobile Broadband, eMBB), Ultra Reliable Low Latency Communications (URLLC), and massive Machine Type Communications (mMTC). Herein, eMBB aims to enable users to obtain multimedia contents, services and data, and demands for the eMBB is growing rapidly. Since the eMBB may be deployed in different scenarios, such as indoors, in urban areas, and in rural areas, differences of capabilities and demands of the eMBB are relatively great, so it must be analyzed in detail in combination with specific deployment scenarios. Typical applications of the URLLC include: industrial automation, power automation, remote medical operation (e.g., surgery), transportation safety security, etc. Typical characteristics of the mMTC include: high connection density, small data volumes, delay-insensitive services, low cost, and long service life, etc.

In the 5G network environment, for the purpose of reducing air interface signaling, restoring wireless connections quickly, and restoring data traffics quickly, a new RRC (Radio Resource Control) state is defined, that is, an RRC_INACTIVE (RRC inactive) state. This state is different from an RRC_IDLE (RRC idle) state, RRC_ACTIVE (RRC active) state or RRC_CONNECTED (RRC connected) state.

The energy saving of the terminal device (or referred to as a UE) is described respectively below:

### First, for the energy saving of the terminal device in the RRC_CONNECTED state

In the evolution of 5G, a higher requirement is placed on the power saving of the UE (i.e., the terminal device). For example, for the existing DRX (Discontinuous Reception) mechanism, during each ON duration (active time), the UE (i.e., the terminal device) needs to continuously detect a PDCCH (Physical Downlink Control CHannel) to judge whether the base station schedules a data transmission sent to the UE itself. For most UEs (i.e., the terminal devices), they may not have the need to receive the data transmission for a long time, but still need to keep a regular wake-up mechanism to monitor a possible downlink transmission. For this type of UEs (i.e., the terminal devices), there is a space for further optimization of power saving.

In the R16 standard, an energy-saving signal is introduced to achieve further energy saving. The energy-saving signal may be used in combination with the DRX mechanism. A processing method for introducing the energy-saving signal may specifically include: receiving, by the terminal device, the energy-saving signal (or referred to as an energy-saving wake-up signal) before a DRX ON duration. That is, when there is a data transmission for one terminal device in one DRX period, the network device may "wake up" the terminal device by the energy-saving signal, so that the terminal device monitors the PDCCH during the DRX ON duration after being woken up; otherwise, when there is no data transmission for one terminal device in one DRX period, no energy-saving signal is transmitted to the terminal device (that is, the terminal device is not "woken up"), so that the terminal device does not need to monitor the PDCCH during the DRX ON Duration. Compared with the existing DRX mechanism, the above-mentioned processing method for introducing the energy-saving signal can omit the monitoring of the PDCCH during the DRX ON duration, when there is no data transmission for the terminal device, thereby achieving the energy saving of the terminal device. Herein, the energy-saving signal may be carried by a DCI (DownLink Control Information) format 2_6.

The time of the terminal device outside the DRX (Discontinuous Reception) On duration is referred to as an inactive time, and the time during the DRX ON duration is referred to as an active time. In combination with FIG. 2, the processing method for introducing the energy-saving signal in the DRX is described, and the processing method may include: a first energy-saving signal indicates to monitore the PDCCH, then the terminal device monitors the PDCCH within an ON duration of a first DRX period (the ON duration of the first DRX period is represented as a black block in FIG. 2) after receiving the first energy-saving signal; a second energy-saving signal indicates to not monitore the PDCCH, then the terminal device does not monitor the PDCCH within an ON duration of a second DRX period (the ON duration of the second DRX period is represented as a colorless block in FIG. 2) after receiving the second energy-saving signal; a third energy-saving signal indicates to not monitore the PDCCH, then the terminal device does not monitor the PDCCH within an ON duration of a third DRX period (the ON duration of the third DRX period is represented as a colorless block in FIG. 2) after receiving the third energy-saving signal; a fourth energy-saving signal indicates to monitore the PDCCH, then the terminal device monitors the PDCCH within an ON duration of a fourth DRX period (the ON duration of the fourth DRX period is represented as a black block in FIG. 2) after receiving the fourth energy-saving signal.

In the R17 standard, in order to further enhance the energy saving of the UE (i.e., the terminal device) in the connected state (i.e., the RRC_CONNECTED state), an enhanced scheme of search space set group switching of R16 and a scheme of skipping the PDCCH monitoring in a gap of the data transmission (i.e., a scheme of PDCCH skipping) are introduced to achieve the power saving. Herein, control information related to the search space set group switching and the PDCCH skipping may be carried by the PDCCH.

### Second, for the energy saving of the terminal device in the RRC-Idle (RRC_IDLE) / RRC-inactive (RRC_INACTIVE) state

The terminal device in the RRC idle/inactive state receives a paging message in the manner of the DRX. Since there is one paging occasion (PO) within one DRX period, the terminal device only receives the paging message during the PO and does not receive the paging message at the time outside the PO, thereby achieving the purpose of power saving. However, in actual situations, a probability of the terminal device being paged may not be high, therefore, if the terminal device periodically detects the PDCCH on the corresponding PO, and there is a high probability that the paging message sent to the terminal device itself is not detected, it will objectively cause a waste of power.

Similar to the energy saving of the terminal device in the RRC_CONNECTED state in the R16 standard, in the R17 standard, the energy saving of the terminal device in the idle state for receiving the paging message is optimized, and an energy-saving signal similar to the aforementioned energy-saving signal is introduced, which is referred to as a PEI (paging early indication). The PEI is used to indicate whether the terminal device receives a paging PDCCH during a target PO before the target PO arrives. The above-mentioned energy-saving signal (i.e., the PEI) (hereinafter referred to as an energy-saving signal based on a PDCCH channel, for the convenience of description) is carried on a PDCCH channel, and specifically, the energy-saving signal (i.e., the PEI) is carried by DCI (Downlink Control Information) format 2_7.

The energy-saving signal based on the PDCCH channel may carry more energy-saving information, for example, may carry sub-grouping information for indicating a terminal device sub-grouping (or a UE sub-grouping) corresponding to the energy-saving information. Multiple terminal device groups may be obtained by further grouping multiple terminal devices corresponding to the same PO according to UE_IDs (identities). If there is any terminal device that needs to be paged, in the terminal device group to which a terminal device belongs, the terminal device needs to receive the paging message on the PO; otherwise, the terminal device does not need to receive the paging message. By combining the terminal device group (or terminal device sub-grouping) information with the energy-saving information as above, the terminal device which needs to or not to receive the paging at the target PO, may be indicated more precisely. For example, a scenario in which a terminal device is woken up by an energy-saving signal to receive a paging message, is shown in FIG. 3: a first energy-saving signal indicates that a terminal device in one or more terminal device groups receives paging on a corresponding PF (Paging Frame) or PO (the PF or PO indicated by the first energy-saving signal is represented as a gray block in FIG. 3), then terminal devices within the terminal device group monitor the paging on the PF or PO after being woken up; a second energy-saving signal indicates not to monitor the PDCCH, that is, indicates that terminal devices in one or more terminal device groups do not receive paging on a corresponding PF or PO (the PF or PO indicated by the second energy-saving signal is represented as a colorless block in FIG. 3), then the terminal devices in the terminal device group may not monitor the paging on the PF or PO; a third energy-saving signal indicates that a terminal device in one or more terminal device groups receives paging on a corresponding PF or PO (the PF or PO indicated by the third energy-saving signal is represented as a gray block in FIG. 3), then terminal devices within the terminal device group monitor the paging on the PF or PO after being woken up.

For further power saving of the terminal device, the R18 standard plans to introduce a scheme of a wake-up receiver (WUR) receiving the energy-saving signal. The WUR has the characteristics of extremely low cost, extremely low complexity and extremely low power consumption, and it receives the energy-saving signal in a manner based on envelope detection mainly. Therefore, the energy-saving signal received by the WUR is different from the signal carried based on the PDCCH defined in the existing R16, and R17 standards in modulation methods, waveforms, etc. The energy-saving signal is mainly an envelope signal obtained by performing an ASK modulation on a carrier signal. The demodulation for the envelope signal may also be accomplished by driving a low power comsunption circuit based on energy provided by a wireless radio frequency signal, so it may be passive. The WUR may also be powered by the terminal device, and regardless of the power supply method, the WUR greatly reduces the power consumption, compared to the traditional receiver of the terminal device. For example, the WUR may achieve the power consumption less than 1mw (milliwatt), which is much lower than the power consumption of the traditional receiver ranging from tens to hundreds of mW. The WUR may be combined with the terminal device as an additional module of a receiver of a terminal device, or may be a wake-up function module of a terminal device separately.

It should be understood that the terms "system" and "network" herein are often used interchangeably herein. The term "and/or" herein is only an associated relationship for describing associated objects, meaning that there may be three kinds of relationships, for example, A and/or B may mean three cases where: A exists alone, both A and B exist, and B exists alone. In addition, the character "j" herein generally means that associated objects before and after "/" are in an "or" relationship.

It should be understood that the "indication" mentioned in the embodiments of the present application may be a direct indication, an indirect indication, or may also represent having an associated relationship. For example, A indicates B, which may mean that A directly indicates B, for example, B may be acquired by A; may also mean that A indirectly indicates B, for example, A indicates C, and B may be acquired by C; may also mean that there is an associated relationship between A and B.

In the description of the embodiments of the present application, the term "corresponding" may mean that there is a direct correspondence or indirect correspondence between two objects, may also mean that there is an associated relationship between two objects, or may also mean relationships between "indicating" and "being indicated", between "configuring" and "being configured", etc.

To facilitate the understanding of the technical solutions of the embodiments of the present application, the relevant technologies of the embodiments of the present application are described below. The following relevant technologies as optional solutions may be arbitrarily combined with the technical solutions of the embodiments of the present application, which all belong to the protection scope of the embodiments of the present application.

FIG. 4 is a schematic flowchart of an information transmission method according to an embodiment of the present application. The method may optionally be applied to the system shown in FIG. 1, but not limited thereto. The method includes at least a portion of the following contents.

S410, a terminal device monitors a wake-up signal (WUS) on a time-frequency resource of the WUS; where information related to the time-frequency resource of the WUS is configured by a network device.

After performing S410, the method may further include: receiving, by the terminal device, first information transmitted by the network device, where the first information includes the information related to the time-frequency resource of the WU.

Herein, the first information may be carried by any one of an RRC (Radio Resource Control) signaling, DCI (Downlink Control Information), or a system message.

After the terminal device receives the first information, the terminal device may further determine the time-frequency resource of the WUS based on the information related to the time-frequency resource of the WUS included in the first information.

Then, S410 may be performed, that is, the terminal device monitors the WUS on the time-frequency resource of the WUS. The above-mentioned WUS may also be referred to as a low power consumption WUS, or may be referred to as other names, all of which are within the protection scope of this embodiment. The WUS may be used to wake up the terminal device, so that the terminal device performs a data transmission and/or monitors a paging message.

Furthermore, in the above S410, monitoring, by the terminal device, the WUS on the time-frequency resource of the WUS, specifically may be: monitoring, by a first component of the terminal device, the WUS on the time-frequency resource of the WUS. Herein, the terminal device at least includes the first component and a second component. The power consumption of the first component is lower than that of the second component. That is to say, the first component of the terminal device monitors the WUS on the time-frequency resource of the WUS, and in a case where the WUS is monitored (or received), the second component of the terminal device is woken up. The second component of the terminal device performs the transmission of data and the monitoring of the paging message.

Alternatively, the WUS may also carry relevant indication information, and the relevant indication information is used to indicate whether the terminal device is woken up. Correspondingly, in the above S410, monitoring, by the terminal device, the WUS on the time-frequency resource of the WUS, specifically may be: monitoring, by a first component of the terminal device, the WUS on the time-frequency resource of the WUS. Herein, the terminal device at least includes the first component and a second component. The power consumption of the first component is lower than that of the second component. That is to say, the first component of the terminal device monitors the WUS on the time-frequency resource of the WUS, and in a case where the WUS is monitored (or received), if the relevant indication information carried in the WUS indicates that the terminal device is woken up, the second component is controlled to be woken up. The second component of the terminal device performs the transmission of data and the monitoring of the paging message. It needs to be noted that a form of the relevant indication information carried in the aforementioned WUS may vary according to different actual situations, for example, the relevant indication information may include an identity of the terminal device, an identity of a terminal group, an indication bit, or the like. The indication bit may be a certain bit in a bit map, and a value of the bit may be used to indicate whether to wake up the terminal device. For example, a first value indicates to wake up the terminal device, and a second value indicates not to wake up the terminal device. The first value is different from the second value, for example, the first value is 1 and the second value is 0, or vice versa. In addition, the indication bit may correspond to one terminal device or may correspond to one terminal device group, which is not exhaustively listed herein. The specific content of the indication relevant information is not limited by this embodiment, as long as it can indicate the terminal device to wake up the second component or not, it is within the protection scope of this embodiment, which will not be exhaustively listed.

It should be understood that after the forementioned process of the terminal device receiving the first information transmitted by the network device is completed, S410 may be performed in a case where the terminal device is in the RRC_IDLE state or the RRC_INACTIVE state at any one time. That is, S410 may specifically mean that: in a case where the terminal device is in the RRC_IDLE state or in the RRC_INACTIVE state, the first component of the terminal device monitors the WUS on the time-frequency resource of the WUS.

It also needs to be pointed out that, in the process of the first component of the terminal device monitoring the WUS on the time-frequency resource of the WUS, the second component of the terminal device may be in a dormant state. The dormant state may mean that a portion of functions or a portion of members of the second component are in an ON state, but another portion of the functions or another portion of the members are in an OFF state or in a pending woken-up state, etc. The terminal device may only include the first component and the second component described above; or, the terminal device may include other components in addition to the first component and the second component described above, which are not exhaustively listed in this embodiment.

Exemplarily, the first component may refer to a low power consumption receiver in the terminal device, or may be referred to as a wake-up receiver (WUR), or may be referred to as a zero power consumption WUR, or may be referred to as a low power consumption WUR, and more names for the first component are not exhaustively listed in this embodiment. The second component may refer to a main receiver in the terminal device.

In conjunction with FIG. 5, the aforementioned terminal device is illustrated, and the terminal device is formed by a main receiver and a WUR shown in FIG. 5. Furthermore, if the network device needs the terminal device to turn on or wake up the second component, i.e., the main receiver in FIG. 5, the network device may transmit a WUS to the terminal device. Correspondingly, the WUR of the terminal device may monitor the WUS; in a case where the WUR of the terminal device monitors the WUS, the main receiver (i.e., the aforementioned second component) of the terminal device is controlled to be turned on or woken up; in a case where the WUR of the terminal device does not monitor the WUS, the main receiver of the terminal device may keep in the dormant state. That is, when the terminal device does not have a traffic or a paging message, the terminal device may only use the WUR (i.e., the first component); only when the terminal device has a traffic or a paging message, the WUR of the terminal device receives the WUS, and then the main receiver of the terminal device is woken up to receive and transmit data. Or similar to the forementioned embodiment, the WUS may also carry relevant indication information, where the relevant indication information is used to indicate whether the terminal device is woken up. Correspondingly, the WUR of the terminal device may monitor the WUS; in a case where the WUR of the terminal device monitors the WUS, if the relevant indication information carried in the WUS is used to indicate that the terminal device is woken up, the main receiver of the terminal device is controlled to be turned on or woken up; in a case where the WUR of the terminal device does not monitor the WUS, or the WUR of the terminal device monitors the WUS and the relevant indication information carried in the WUS is used to indicate to not wake up the terminal device, the main receiver of the terminal device may keep in the dormant state. Herein, the detailed description of the relevant indication information carried in the WUS is the same as that in the aforementioned embodiment and is not repeated herein.

To make it easy to distinguish, differences between the WUR and the main receiver are introduced below in terms of modulation manners, modulation waveforms, transmission rates, supported bandwidth ranges, code rates, etc.

In terms of the modulation manners supported by the two, the complexity of the modulation manner supported by the WUR is lower than the complexity of the modulation manner supported by the main receiver. In some implementations, the modulation manner supported by the WUR may include one or more of the following modulation manners: amplitude shift keying (ASK), phase shift keying (PSK), frequency shift keying (FSK), etc. Correspondingly, the modulation manner supported by the main receiver may include one or more of the following modulation manners: quadrature phase shift keying (QPSK), quadrature amplitude modulation (QAM), orthogonal frequency division multiplexing (OFDM), etc. Of course, in some other implementations, the main receiver may also support at least one modulation manner of the ASK, PSK, or FSK. This is not specifically limited by the embodiments of the present application.

In terms of the modulation waveforms supported by the two, the complexity of the modulation waveform supported by WUR is lower than the complexity of the modulation waveform supported by the main receiver. For example, the modulation waveform supported by the WUR may include one or more of the following modulation waveforms: a waveform corresponding to an ASK signal, a waveform corresponding to a PSK signal, and a waveform corresponding to an FSK signal. Correspondingly, the modulation waveform supported by the main receiver may include one or more of the following modulation waveforms: a waveform corresponding to a QPSK signal, a waveform corresponding to a QAM signal, and a waveform corresponding to an OFDM signal. Of course, in some embodiments, the modulation waveform supported by the main receiver may also include waveforms corresponding to one or more signals of the ASK signal, PSK signal, or FSK signal.

In terms of the transmission rates supported by the two, the transmission rate supported by the WUR is lower than the transmission rate supported by the main receiver.

In terms of the bandwidth ranges supported by the two, the bandwidth range supported by the WUR is smaller than the bandwidth range supported by the main receiver, or in other words, the bandwidth supported by the WUR is narrower than the bandwidth supported by the main receiver.

In terms of the code rates supported by the two, the code rate supported by the WUR is lower than the code rate supported by the main receiver.

In the scheme provided in this embodiment, the terminal device only uses the first component (i.e., the WUR) to monitor the WUS, which may save the power consumption of the terminal device. This is due to using extremely low power consumption (generally, less than 1mw) when the WUR of the terminal device is working; and the WUR of the terminal device uses a manner of the ASK or FSK to modulate a signal, which also enables the WUR of the terminal device to use an extremely simple hardware structure and an extremely simple receiving method to receive and demodulate the signal. For example, for an ASK signal, the WUR of the terminal device only needs to use a manner of envelope detection to receive the signal. Therefore, compared to the traditional mode in which the terminal device always uses the main receiver, this embodiment adopts the WUR of the terminal device to monitor the WUS, which can greatly save the power consumption of the terminal device.

Based on the above related description for the overall processing, various contents that may be included in the information related to the time-frequency resource of the WUS are described in detail below.

The information related to the time-frequency resource of the WUS includes at least one of: information related to a frequency domain resource of the WUS; and information related to a time domain resource of the WUS.

Regarding the information related to the frequency domain resource of the WUS, the WUS may occupy a portion of a spectrum of a main system (i.e., a frequency domain resource of the main system, or referred to as a working frequency band of the main system, or referred to as a working bandwidth of the main system), or the WUS may occupy a segment of dedicated spectrum resource(i.e., dedicated frequency domain resource).

Specifically, the information related to the frequency domain resource of the WUS may include at least one of:
position indication information of a transmission bandwidth of the WUS;
a size of the transmission bandwidth of the WUS;
a subcarrier spacing of the WUS; and
a length of a cyclic prefix (CP) of the WUS.

The forementioned contents that may be included in the information related to the frequency domain resource of the WUS are described respectively below.

The position indication information of the transmission bandwidth of the WUS includes one of:
first position indication information, where the first position indication information is used to indicate a relative relationship between a position of the transmission bandwidth of the WUS and a preset frequency domain range;
second position indication information, where the second position indication information is used to indicate a relative relationship between the position of the transmission bandwidth of the WUS and a first reference frequency point;
third position indication information, where the third position indication information is used to indicate a position of a first-type frequency point in the transmission bandwidth of the WUS.

The above three types of position indication information are described specifically below, respectively.

In a possible implementation, the position of the transmission bandwidth of the WUS may be related to the preset frequency domain range.

The preset frequency domain range may be configured by the network device, or preset.

The preset frequency domain range being preset, may mean that: the preset frequency domain range is pre-configured or pre-saved by the terminal device. For example, the preset frequency domain range may be written into the terminal device when the terminal device is shipped from the factory.

The preset frequency domain range being configured by the network device may mean that: the terminal device receives system information and acquires the preset frequency domain range from the system information. More specifically, it may mean that the second component of the terminal device receives the system information and the preset frequency domain range is acquired from the system information. Exemplarily, when the terminal device is in the RRC_IDLE state or the RRC_INACTIVE state, the terminal device (such as the second component of the terminal device) reads the system information during a cell search procedure, and acquires the preset frequency domain range from the system information.

Alternatively, the preset frequency domain range being configured by the network device may mean that: in a case where the terminal device is in the RRC_CONNECTED state, the terminal device receives preset frequency domain range configuration information transmitted by the network device, and acquires the preset frequency domain range from the preset range configuration information. Herein, the preset frequency domain range configuration information may be carried by an RRC signaling or DCI.

Alternatively, the preset frequency domain range may also be configured in other manners, which will not be listed exhaustively in this embodiment.

The preset frequency domain range may include: an initial Downlink (DL) Bandwidth Part (BWP).

The first position indication information includes one of:
the transmission bandwidth of the WUS being located within the preset frequency domain range, and the first-type frequency point in the transmission bandwidth of the WUS being located at a same position as a first-type frequency point in the preset frequency domain range;
the transmission bandwidth of the WUS being located within the preset frequency domain range, and there being a first frequency offset between the first-type frequency point in the transmission bandwidth of the WUS and a second reference frequency point in the preset frequency domain range;
the transmission bandwidth of the WUS being located outside the preset frequency domain range, and there being a second frequency offset between the first-type frequency point in the transmission bandwidth of the WUS and the second reference frequency point in the preset frequency domain range.

Specifically, the transmission bandwidth of the WUS being located within the preset frequency domain range, and the first-type frequency point in the transmission bandwidth of the WUS being located at the same position as the first-type frequency point in the preset frequency domain range, may include the following cases depending on the first-type frequency point being different.

Case 1: the first-type frequency point is a lowest frequency point. The transmission bandwidth of the WUS being located within the preset frequency domain range, and the first-type frequency point in the transmission bandwidth of the WUS being located at the same position as the first-type frequency point in the preset frequency domain range, specifically means that: the transmission bandwidth of the WUS is located within the preset frequency domain range, and a position of the lowest frequency point in the transmission bandwidth of the WUS is the same as a position of the lowest frequency point of the preset frequency domain range.

Case 2: the first-type frequency point is a highest frequency point. The transmission bandwidth of the WUS being located within the preset frequency domain range, and the first-type frequency point in the transmission bandwidth of the WUS being located at the same position as the first-type frequency point in the preset frequency domain range, specifically means that: the transmission bandwidth of the WUS is located within the preset frequency domain range, and a position of the highest frequency point in the transmission bandwidth of the WUS is the same as a position of the highest frequency point of the preset frequency domain range.

Case 3: the first-type frequency point is a central frequency point. The transmission bandwidth of the WUS being located within the preset frequency domain range, and the first-type frequency point in the transmission bandwidth of the WUS being located at the same position as the first-type frequency point in the preset frequency domain range, specifically means that: the transmission bandwidth of the WUS is located within the preset frequency domain range, and a position of the central frequency point in the transmission bandwidth of the WUS is the same as a position of the central frequency point of the preset frequency domain range.

Herein, the first-type frequency point may include one of: the lowest frequency point, the highest frequency point, and the central frequency point. A type of the first-type frequency point may be configured by the network device, or may be preset. It should be understood that in addition to the three types listed above, the first-type frequency point may also be other frequency points which will not be listed exhaustively, and as long as the terminal device and the network device both define the type of the first-type frequency point as the same, the type of the first-type frequency point is within the protection scope of this embodiment. For example, the terminal device and the network device both set or define the first-type frequency point as the lowest frequency point, or both set or define the first-type frequency point as the central frequency point, etc.

The above-mentioned preset frequency domain range has been described above, and may be an initial DL BWP.

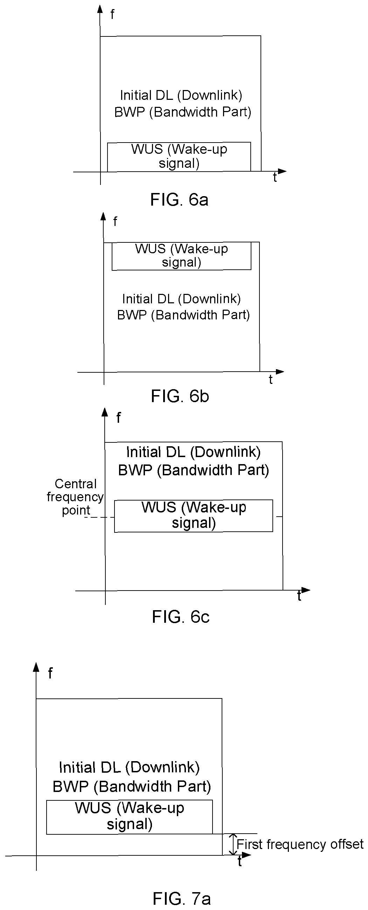

In the above Case 1, the transmission bandwidth of the WUS being located within the preset frequency domain range, and the position of the lowest frequency point in the transmission bandwidth of the WUS being the same as the position of the lowest frequency point of the preset frequency domain range, which may be shown in FIG. 6a, specifically means that: the transmission bandwidth of the WUS is located within the initial DL BWP, and the position of the lowest frequency point in the transmission bandwidth of the WUS being aligned with the position of the lowest frequency point of the initial DL BWP.

In the above Case 2, the transmission bandwidth of the WUS being located within the preset frequency domain range, and the position of the highest frequency point in the transmission bandwidth of the WUS is the same as the position of the highest frequency point of the preset frequency domain range, referring to FIG. 6b, specifically means that: the transmission bandwidth of the WUS is located within the initial DL BWP, and the position of the highest frequency point of the transmission bandwidth of the WUS is aligned with the position of the highest frequency point of the initial DL BWP.

In the above Case 3, the transmission bandwidth of the WUS being located within the preset frequency domain range, and a position of the central frequency point in the transmission bandwidth of the WUS being the same as a position of the central frequency point of the preset frequency domain range, referring to FIG. 6c, specifically means that: the transmission bandwidth of the WUS is located within the initial DL BWP, and the position of the central frequency point of the transmission bandwidth of the WUS is aligned with the position of the central frequency point of the initial DL BWP.

The transmission bandwidth of the WUS being located within the preset frequency domain range, and there being a first frequency offset between the first-type frequency point in the transmission bandwidth of the WUS and a second reference frequency point in the preset frequency domain range, may include the following cases depending on the first-type frequency point being different.

Case 4: the first-type frequency point is the lowest frequency point. The transmission bandwidth of the WUS is within the preset frequency domain range, and there is the first frequency offset between the lowest frequency point of the transmission bandwidth of the WUS and the second reference frequency point of the preset frequency domain range.

Case 5: the first-type frequency point is the highest frequency point. The transmission bandwidth of the WUS is within the preset frequency domain range, and there is the first frequency offset between the highest frequency point in the transmission bandwidth of the WUS and the second reference frequency point of the preset frequency domain range.

Case 6: the first-type frequency point is the central frequency point. The transmission bandwidth of the WUS is within the preset frequency domain range, and there is the first frequency offset between the central frequency point of the transmission bandwidth of the WUS and the second reference frequency point of the preset frequency domain range.

Herein, the first-type frequency point may include one of: the lowest frequency point, the highest frequency point, and the central frequency point. The type of the first-type frequency point is the same as the description in the aforementioned embodiment and will not be repeated herein.

The second reference frequency point is a frequency point within the preset frequency domain range. The second reference frequency point may be: any frequency point within the preset frequency domain range. More specifically, the second reference frequency point is one of: the lowest frequency point of the preset frequency domain range; the highest frequency point of the preset frequency domain range; or the central frequency point of the preset frequency domain range. It should be understood that the second reference frequency point may also be other frequency points within the preset frequency domain range except for the central frequency point. As long as the terminal device and the network device have the same definition for the second reference frequency point, it is within the protection scope of this embodiment.

Herein, the lowest frequency point of the preset frequency domain range is: a frequency point in a physical resource block (PRB) with a lowest frequency in the preset frequency domain range; and/or, the highest frequency point of the preset frequency domain range is: a frequency point in a PRB with a highest frequency in the preset frequency domain range.

Specifically, a PRB may correspond to 12 continuous subcarriers in the frequency domain, and a frequency domain range of each subcarrier may be fixed (e.g., 15 Khz). Correspondingly, the frequency point in the PRB with the lowest frequency in the preset frequency domain range may refer to a frequency point corresponding to a subcarrier with a lowest frequency in the PRB with the lowest frequency in the preset frequency domain range; or may refer to a central frequency point in the PRB with the lowest frequency in the preset frequency domain range; or may also refer to a frequency point corresponding to a subcarrier with a highest frequency in the PRB with the lowest frequency in the preset frequency domain range. An exhaustive list of all its possible cases will not be repeated here.

Herein, the frequency point corresponding to the subcarrier with the lowest frequency in the PRB with the lowest frequency in the preset frequency domain range, may specifically refer to: a central frequency point corresponding to the subcarrier with the lowest frequency in the PRB with the lowest frequency in the preset frequency domain range. The frequency point corresponding to the subcarrier with the highest frequency in the PRB with the highest frequency of the preset frequency domain range may specifically refer to: a central frequency point corresponding to the subcarrier with the highest frequency in the PRB with the highest frequency of the preset frequency domain range.

Similarly, the frequency point in the PRB with the highest frequency in the preset frequency domain range may refer to a central frequency point of the PRB with the highest frequency in the preset frequency domain range; or may also refer to a frequency point corresponding to a subcarrier with a highest frequency in the PRB with the highest frequency in the preset frequency domain range; or may refer to a central frequency point in the PRB with the highest frequency in the preset frequency domain range. An exhaustive list of all its possible cases will not be repeated here.

The first frequency offset may vary according to actual conditions.

For example, in the above Case 4, the first-type frequency point is the lowest frequency point, and the second reference frequency point is the frequency point in the PRB with the lowest frequency in the preset frequency domain range. The transmission bandwidth of the WUS being located within the preset frequency domain range, and there being the first frequency offset between the lowest frequency point of the transmission bandwidth of the WUS and the second reference frequency point in the preset frequency domain range, referring to FIG. 7a, specifically means that: the transmission bandwidth of the WUS is located within the initial DL BWP, and there is the first frequency offset between a position of the lowest frequency point of the transmission bandwidth of the WUS and a frequency point (specifically, a frequency point corresponding to a subcarrier with a lowest frequency) in the PRB with the lowest frequency in the initial DL BWP. Herein, the first frequency offset may be configured according to actual conditions. For example, the first frequency offset may be 100 Khz, 1.0 Khz, or may be larger or smaller, which is not exhaustively listed herein.

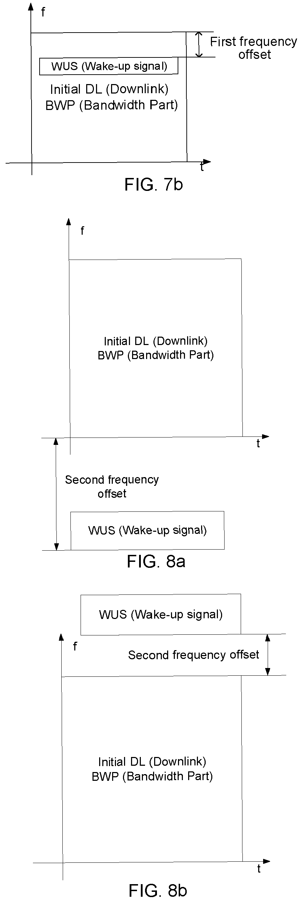

As another example, in the above Case 5, the first-type frequency point is the highest frequency point, and the second reference frequency point is the frequency point in the PRB with the highest frequency in the preset frequency domain range. The transmission bandwidth of the WUS being located within the preset frequency domain range, and there being the first frequency offset between the highest frequency point in the transmission bandwidth of the WUS and the second reference frequency point of the preset frequency domain range, which is shown in FIG. 7b, specifically means that: the transmission bandwidth of the WUS is located within the initial DL BWP, and there is the first frequency offset between a position of the highest frequency point in the transmission bandwidth of the WUS and the frequency point (specifically, a frequency point corresponding to a subcarrier with a highest frequency) in the PRB with the highest frequency in the initial DL BWP. Herein, the first frequency offset may be set according to actual conditions. For example, the first frequency offset may be 200 Khz, 1.8 Khz, or may be larger or smaller, which is not exhaustively listed herein.

As another example, in the above Case 6, the first-type frequency point is the central frequency point, and the second reference frequency point is the frequency point in the PRB with the highest frequency in the preset frequency domain range. The transmission bandwidth of the WUS being located within the preset frequency domain range, and there being the first frequency offset between the central frequency point in the transmission bandwidth of the WUS and the second reference frequency point of the preset frequency domain range, specifically means that: the transmission bandwidth of the WUS is located within the initial DL BWP, and there is the first frequency offset between a position of the central frequency point in the transmission bandwidth of the WUS and the frequency point (specifically, a frequency point corresponding to a subcarrier with a highest frequency) in the PRB with the highest frequency in the initial DL BWP. Herein, the first frequency offset may be set according to actual conditions. For example, the first frequency offset may be 150 Khz, 1.5 Khz, or may be larger or smaller, which is not exhaustively listed herein.

In the above Case 1 to Case 6, the position of the transmission bandwidth of the WUS is located within the initial DL BWP, that is, the WUS occupies a portion of the spectrum of the main system, that is, occupies a portion of the frequency domain resource of the main system.

The transmission bandwidth of the WUS being located outside the preset frequency domain range, and there being the second frequency offset between the first-type frequency point in the transmission bandwidth of the WUS and the second reference frequency point in the preset frequency domain range may include the following cases depending on the first-type frequency point being different:
Case 7: the first-type frequency point is the lowest frequency point. The transmission bandwidth of the WUS is located outside the preset frequency domain range, and there is the second frequency offset between the lowest frequency point of the transmission bandwidth of the WUS and the second reference frequency point in the preset frequency domain range.

Case 8: the first-type frequency point is the highest frequency point. The transmission bandwidth of the WUS is located outside the preset frequency domain range, and there is the second frequency offset between the highest frequency point of the transmission bandwidth of the WUS and the second reference frequency point in the preset frequency domain range.

Case 9: the first-type frequency point is a central frequency point. The transmission bandwidth of the WUS is located outside the preset frequency domain range, and there is the second frequency offset between the central frequency point of the transmission bandwidth of the WUS and the second reference frequency point in the preset frequency domain range.

Herein, the first-type frequency point may include one of: the lowest frequency point, the highest frequency point, and the central frequency point. The type of the first-type frequency point is the same as the description in the aforementioned embodiment, and will not be repeated herein.

The second reference frequency point is a frequency point within the preset frequency domain range. The second reference frequency point may be: any frequency point within the preset frequency domain range. More specifically, the second reference frequency point is one of: a lowest frequency point of the preset frequency domain range; a highest frequency point of the preset frequency domain range; or a central frequency point of the preset frequency domain range. It should be understood that the second reference frequency point may also be other frequency points within the preset frequency domain range except for the central frequency point. As long as the terminal device and the network device have the same definition for the second reference frequency point, it may be within the protection scope of this embodiment.

Herein, the lowest frequency point of the preset frequency domain range is: the lowest frequency point of the preset frequency domain range is: a frequency point in a physical resource block (PRB) with a lowest frequency in the preset frequency domain range; and/or the highest frequency point of the preset frequency domain range is: a frequency point in a PRB with a highest frequency in the preset frequency domain range. The detailed description of the lowest frequency point of the preset frequency domain range and the highest frequency point of the preset frequency domain range are the same as the description in the aforementioned embodiment, and are not repeated herein.

In an example of the above Case 7, the first-type frequency point is the lowest frequency point; the second reference frequency point is the lowest frequency point of the preset frequency domain range, for example, the second reference frequency point is a frequency point corresponding to a subcarrier with a lowest frequency in the PRB with the lowest frequency in the initial DL BWP.

The transmission bandwidth of the WUS being located outside the preset frequency domain range, and there being the second frequency offset between the lowest frequency point in the transmission bandwidth of the WUS and the second reference frequency point in the preset frequency domain range, which is shown in FIG. 8a, may be: the transmission bandwidth of the WUS being located outside the initial DL BWP, and a position of the lowest frequency point of the transmission bandwidth of the WUS being a position after the second frequency offset is applied to the lowest frequency point (such as a frequency point corresponding to a subcarrier with a lowest frequency in the PRB with the lowest frequency) in the initial DL BWP (specifically, it may be a position after subtracting the second frequency offset from the lowest frequency point in the initial DL BWP). The second frequency offset may be 100 Khz, 50 Khz, etc.

In another example of the above Case 7, the first-type frequency point is the lowest frequency point; the second reference frequency point is the highest frequency point of the preset frequency domain range, for example, the second reference frequency point is a frequency point corresponding to a subcarrier with a highest frequency in the PRB with the highest frequency in the preset frequency domain range.

The transmission bandwidth of the WUS being located outside the preset frequency domain range, and there being the second frequency offset between the highest frequency point in the transmission bandwidth of the WUS and the second reference frequency point in the preset frequency domain range, which is shown in FIG. 8b, may be: the transmission bandwidth of the WUS being located outside the initial DL BWP, and a position of the lowest frequency point in the transmission bandwidth of the WUS being a position after the second frequency offset is applied to the highest frequency point (such as a frequency point corresponding to a subcarrier with a highest frequency in the PRB with the highest frequency) of the initial DL BWP (specifically, it may be a position after adding the second frequency offset to the highest frequency point of the initial DL BWP). The second frequency offset may be 150 Khz, 80 Khz, etc.

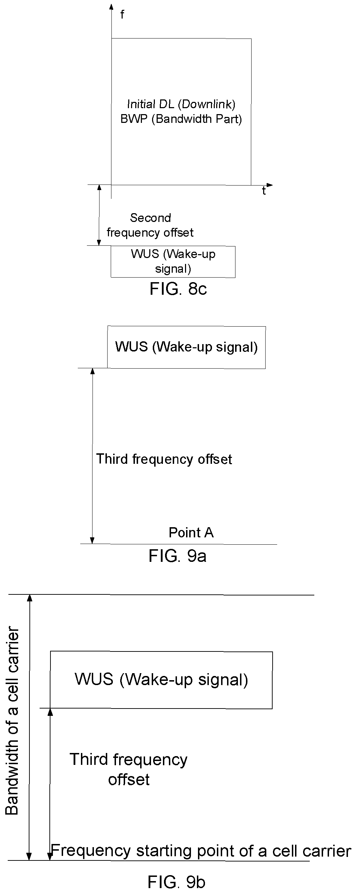

In an example of the above Case 8, the first-type frequency point is the highest frequency point, and the second reference frequency point is the lowest frequency point of the preset frequency domain range; the transmission bandwidth of the WUS being located outside the preset frequency domain range, and there being the second frequency offset between the highest frequency point of the transmission bandwidth of the WUS and the second reference frequency point in the preset frequency domain range, which is shown in FIG. 8c, may be: the transmission bandwidth of the WUS being located outside the initial DL BWP, and a position of the highest frequency point of the transmission bandwidth of the WUS being a position after the second frequency offset is applied to the lowest frequency point of the initial DL BWP (specifically, it may be a position after subtracting the second frequency offset from the lowest frequency point of the initial DL BWP). The second frequency offset may be 50 Khz, 20 Khz, etc.

In another example of the above Case 8, the first-type frequency point is a highest frequency point, and the second reference frequency point is the highest frequency point of the preset frequency domain range; the transmission bandwidth of the WUS being located outside the preset frequency domain range, and there being the second frequency offset between the highest frequency point in the transmission bandwidth of the WUS and the second reference frequency point in the preset frequency domain range may be: the transmission bandwidth of the WUS being located outside the initial DL BWP, and a position of the highest frequency point in the transmission bandwidth of the WUS being a position after the second frequency offset is applied to the highest frequency point of the initial DL BWP (specifically, it may be a position after adding the second frequency offset to the highest frequency point of the initial DL BWP). The second frequency offset may be 50 Khz, 20 Khz, etc.

In an example of the above Case 9, the first-type frequency point is a central frequency point, and the second reference frequency point is the central frequency point of the preset frequency domain range. The transmission bandwidth of the WUS being located outside the preset frequency domain range, and there being the second frequency offset between the central frequency point of the transmission bandwidth of the WUS and the second reference frequency point in the preset frequency domain range, may be: the transmission bandwidth of the WUS being located outside the initial DL BWP, and a position after the second frequency offset is applied to the central frequency point of the initial DL BWP (it may be a position after adding or subtracting the second frequency offset to the central frequency point of the initial DL BWP) being the central frequency point in the transmission bandwidth of the WUS. The second frequency offset may be 250 Khz, 500 Khz, etc.

In the above Case 7 to Case 9, the position of the transmission bandwidth of the WUS may be configured outside the initial DL BWP, and the lowest frequency point of the initial DL BWP (for example, a subcarrier with a lowest frequency in the PRB with the lowest frequency in the initial DL BWP) or the highest frequency point of the initial DL BWP (for example, a subcarrier with a highest frequency in the PRB with the highest frequency in the initial DL BWP) or the central frequency point of the initial DL BWP may be used as a third reference frequency point; and the position of the transmission bandwidth of the WUS is determined by the third reference frequency point with a frequency offset. In the above cases, the WUS may occupy a dedicated frequency domain resource, that is, may occupy a frequency domain range outside the working bandwidth of the main system; of course, in the above cases, the WUS may also occupy a portion of the frequency domain resource of the main system.

The above embodiment is a method for determining the position of the transmission bandwidth of the WUS based on the preset frequency domain range, that is, the initial DL BWP.

In a possible implementation, the position of the transmission bandwidth of the WUS may also be determined based on a frequency domain position of the first reference frequency point.

The second position indication information includes: a third frequency offset between the first-type frequency point in the transmission bandwidth of the WUS and the first reference frequency point.

Herein, the first reference frequency point is one of: a point A, a frequency starting point position of a cell carrier, a frequency point in a frequency domain range occupied by a cell defining synchronization signal block (CD-SSB).

The first-type frequency point may include one of: a lowest frequency point, a highest frequency point, and a central frequency point. A type of the first-type frequency point may be configured by the network device, or may be preset. It should be understood that in addition to the three types listed above, the first-type frequency point may also be other frequency points which will not be listed exhaustively, and as long as the terminal device and the network device both define the type of the first-type frequency point as the same, it is within the protection scope of this embodiment. For example, the terminal device and the network device both set or define the first-type frequency point as the lowest frequency point, or both set or define the first-type frequency point as the central frequency point, etc.

The third frequency offset between the first-type frequency point in the transmission bandwidth of the WUS and the first reference frequency point may include one of: a third frequency offset between the lowest frequency point in the transmission bandwidth of the WUS and the first reference frequency point; a third frequency offset between the highest frequency point in the transmission bandwidth of the WUS and the first reference frequency point; a third frequency offset between the central frequency point in the transmission bandwidth of the WUS and the first reference frequency point.

The first reference frequency point is taken as the point A as an example for explanation below.

Herein, the point A is a frequency reference point used to indicate a position of a carrier. A position of the point A may be configured by the network device, or may be preset. For example, the terminal device may receive the system information, and acquire the position of the point A (i.e., a frequency domain position of the point A) from the system information.

There is the third frequency offset between the lowest frequency point of the transmission bandwidth of the WUS and the first reference frequency point, as shown in FIG. 9a, there is the third frequency offset between a position of the lowest frequency point in the transmission bandwidth of the WUS and the frequency domain position of the point A. Herein, the third frequency offset may be set according to actual conditions, for example, the third frequency offset may be 200 Khz, or may be larger or smaller, which will not be listed exhaustively herein.

There is the third frequency offset between the highest frequency point of the transmission bandwidth of the WUS and the first reference frequency point, for example, there is the third frequency offset between a position of the highest frequency point of the transmission bandwidth of the WUS and the frequency domain position of the point A. Herein, the third frequency offset may be 300 Khz, or may be larger or smaller, which will not be listed exhaustively herein.

There is the third frequency offset between the central frequency point of the transmission bandwidth of the WUS and the first reference frequency point, for example, there is the third frequency offset between a position of the central frequency point of the transmission bandwidth of the WUS and the frequency domain position of the point A. Herein, the third frequency offset may be 100 Khz, or may be larger or smaller, which will not be listed exhaustively herein.

The first reference frequency point is taken as the frequency starting point position of the cell carrier as an example for explanation below.

There is the third frequency offset between the lowest frequency point of the transmission bandwidth of the WUS and the first reference frequency point, as shown in FIG. 9b, within a bandwidth of the cell carrier, a position by applying the third frequency offset to the frequency starting point position of the cell carrier is used as the position of the lowest frequency point of the transmission bandwidth of the WUS. Herein, the third frequency offset may be 200 Khz, or may be larger or smaller, which will not be listed exhaustively herein.

There is the third frequency offset between the highest frequency point of the transmission bandwidth of the WUS and the first reference frequency point. That is to say, within the bandwidth of the cell carrier, a position by applying the third frequency offset to the frequency starting point position of the cell carrier is used as the position of the highest frequency point of the transmission bandwidth of the WUS. Herein, the third frequency offset may be 400 Khz, or may be larger or smaller, which will not be listed exhaustively herein.

There is the third frequency offset between the central frequency point of the transmission bandwidth of the WUS and the first reference frequency point. That is to say, within the bandwidth of the cell carrier, a position by applying the third frequency offset to the frequency starting point position of the cell carrier is used as the position of the central frequency point of the transmission bandwidth of the WUS. Herein, the third frequency offset may be set according to actual conditions, for example, the third frequency offset may be 400 Khz, or may be larger or smaller, which will not be listed exhaustively herein.

Herein, the frequency starting point position of the cell carrier may be configured by the network device, or may be preset. For example, the terminal device may receive a system message (system information), and acquire the frequency starting point position of the cell carrier from the system message. Herein, the cell may be a serving cell in which the terminal device is located.

The first reference frequency point is taken as the frequency point in the frequency domain range occupied by the CD-SSB as an example for explanation below.

Herein, the CD-SSB is a signal occupying a segment of frequency domain range. That is, the terminal device may determine the position of the transmission bandwidth of the WUS based on a certain frequency point in the frequency domain range occupied by the CD-SSB.

There is the third frequency offset between the lowest frequency point of the transmission bandwidth of the WUS and the first reference frequency point. That is to say, the network device will configure the above-mentioned third frequency offset for the terminal device, and the third frequency offset is a frequency offset between the lowest frequency point of the transmission bandwidth of the WUS and a frequency point in the frequency domain range occupied by the CD-SSB. Herein, the third frequency offset may be 200 Khz, or may be larger or smaller, which will not be listed exhaustively herein.

Alternatively, there is the third frequency offset between the highest frequency point of the transmission bandwidth of the WUS and the first reference frequency point. That is to say, the network device will configure the above-mentioned third frequency offset for the terminal device, and the third frequency offset is a frequency offset between the highest frequency point of the transmission bandwidth of the WUS and a frequency point in the frequency domain range occupied by the CD-SSB. Herein, the third frequency offset may be 20 Khz, or may be larger or smaller, which will not be listed exhaustively herein.

Herein, the frequency point in the frequency domain range occupied by the CD-SSB may be: a central frequency point in the frequency domain range occupied by the CD-SSB; or may be a lowest frequency point in the frequency domain range occupied by the CD-SSB; or may be a highest frequency point in the frequency domain range occupied by the CD-SSB, or the like, which will not be listed exhaustively herein.

In methods provided in the above embodiments, the position of the transmission bandwidth of the WUS may be within the working bandwidth of the main system. Herein, the main system may be a main system in which the main receiver of the terminal device works, for example, may be an NR system.

In a possible implementation, the position indication information of the transmission bandwidth of the WUS includes: third position indication information, and the third position indication information is used to indicate a position of a first-type frequency point in the transmission bandwidth of the WUS.

The first-type frequency point may include one of: a lowest frequency point, a highest frequency point, and a central frequency point. A type of the first-type frequency point may be configured by the network device, or may be preset. It should be understood that in addition to the three types listed above, the first-type frequency point may also be other frequency points, which is not listed exhaustively, and as long as the terminal device and the network device both define the type of the first-type frequency point as the same, it is within the protection scope of this embodiment. For example, the terminal device and the network device both set or define the first-type frequency point as the lowest frequency point, or both set or define the first-type frequency point as the central frequency point, etc.

In this implementation, the third position indication information may directly carry a specific frequency position of the first-type frequency point.

This implementation is particularly applicable for a scenario where the position of the transmission bandwidth of the WUS is outside the working bandwidth of the main system. The transmission bandwidth of the WUS may be on a segment of dedicated frequency domain range (or spectrum resource). Of course, in this implementation, the position of the transmission bandwidth of the WUS may also be located within the working bandwidth of the main system, that is, the transmission bandwidth of the WUS may occupy a portion of the working bandwidth of the main system, which is not limited thereto. Herein, the working bandwidth of the main system may be configured by the network device, for example, may be acquired by the terminal device from the received system information.

The position indication information of the transmission bandwidth of the WUS is described in detail in above embodiments. The size of the transmission bandwidth of the WUS is further described as follows.

The size of the transmission bandwidth of the WUS may be pre-configured, for example, may be directly written into the terminal device. Alternatively, the size of the transmission bandwidth of the WUS may be configured by the network device, for example, may be configured to the terminal device by the system information.

The size of the transmission bandwidth of the WUS is related to a radius of a serving cell in which the terminal device is located, and/or a transmission load of the WUS.

The size of the transmission bandwidth of the WUS is expressed in one of frequency domain units of: Khz, Mhz, PRB, and a number of subcarriers. Herein, the frequency domain unit may be the default for both the terminal device and the network device, that is, be pre-determined by both the terminal device and the network device; or may be pre-indicated by the network device.

The subcarrier spacing of the WUS may also be preset, or configured by the network device. Herein, the subcarrier spacing of the WUS may be the same as or different from a subcarrier spacing used by the second component (i.e., the main receiver) of the terminal device.

Furthermore, the length of the CP of the WUS may also be preset, or configured by the network device; similarly, the length of the CP of the WUS may be the same as or different from a length of a CP used by the second component (i.e., the main receiver) of the terminal device.

In the above embodiments, all contents that may be included in the information related to the frequency domain resource of the WUS are described relevantly. In the actual processing, the information related to the frequency domain resource of the WUS may include all of the aforementioned contents, or may include a portion of the aforementioned contents. In a preferred example, the information related to the frequency domain resource of the WUS at least includes the position indication information of the transmission bandwidth of the WUS.

For example, the information related to the frequency domain resource of the WUS may only include the position indication information of the transmission bandwidth of the WUS; at this time, the size of the transmission bandwidth of the WUS may be preset. The terminal device may determine a position of a certain frequency point in the transmission bandwidth of the WUS according to the position indication information of the transmission bandwidth of the WUS, and then may determine the frequency domain resource range of the WUS in combination with the preset size of the transmission bandwidth of the WUS.

As another example, the information related to the frequency domain resource of the WUS may only include the position indication information of the transmission bandwidth of the WUS and the size of the transmission bandwidth of the WUS. The terminal device may determine a position of a certain frequency point in the transmission bandwidth of the WUS according to the position indication information of the transmission bandwidth of the WUS, and then may determine the frequency domain resource range of the WUS in combination with the size of the transmission bandwidth of the WUS. At this time, the subcarrier spacing of the WUS and the length of the CP of the WUS may be used with a default setting, such as the same as those of the second component (i.e., the main receiver) of the terminal device by default.

It should be understood that manners using in combination with at least one of the aforementioned information related to the frequency domain resource of the WUS are within the protection scope of this embodiment, but will not be exhaustively listed.

The information related to the time domain resource of the WUS in the information related to the time-frequency resource of the WUS is described below.

A configuration of the information related to the time-frequency resource of the WUS is mainly for further controlling a working duration of the first component (i.e., the WUR) of the terminal device, thereby further reducing the power consumption of the first component of the terminal device. To explain specifically, although the power consumption of the first component (i.e., the WUR) of the terminal device is already very low, in order to further reduce the power consumption of the WUR, the working time of the WUR may be configured, so that the first component (i.e., the WUR) of the terminal device starts to receive the WUS or perform other operations (such as measuring, depending on whether the WUR will be supported to perform measuring in the future) only within a portion of the duration, and the first component (i.e., the WUR) of the terminal device may also enter the dormant state at other times, thereby achieving the purpose of further power saving or energy saving.

The information related to the time domain resource of the WUS includes at least one of: a monitoring period of the WUS; and a monitoring duration within the monitoring period of the WUS.

A monitoring period of the WUS may be N time units, where N may be a value greater than or equal to 0. The time unit may be any one of a symbol, a slot, a microsecond, a millisecond, etc., as long as both the terminal device and the network device use the same unit.

The monitoring duration within the monitoring period of the WUS may be M time units, where M may be a value greater than or equal to 0. The time unit may be any one of a symbol, a slot, a microsecond, a millisecond, etc., as long as both the terminal device and the network device use the same unit.

Exemplarily, the information related to the time domain resource of the WUS may only include the monitoring period of the WUS.

The terminal device may control a working duration of the first component (i.e., the WUR) of the terminal device based on the monitoring period of the WUS, that is, use the aforementioned monitoring period of the WUS as a working period of the first component of the terminal device, so that the first component of the terminal device may also have a dormant time and a working time. In this way, the power consumption of the first component of the terminal device may be further reduced, so that the first component of the terminal device is more energy-saving.

Of course, in this exemplary description, the terminal device may also pre-acquire the monitoring duration within the monitoring period of the WUS. For example, the monitoring duration within the monitoring period of the WUS may be preset by the terminal device, or may be configured for the terminal device by the network device by the system information; of course, may also be configured for the terminal device by other messages, such as a RRC signaling, DCI, etc., which are not listed exhaustively herein. Furthermore, the terminal device may control the working duration of the first component based on the monitoring period of the WUS and the monitoring duration within the monitoring period of the WUS.

Exemplarily, the information related to the time domain resource of the WUS may include the monitoring period of the WUS and the monitoring duration within the monitoring period of the WUS.

In this implementation, the working period (i.e., the monitoring period of the WUS) and the working duration within the working period (i.e., the monitoring duration within the monitoring period of the WUS) of the first component (i.e., the WUR) of the terminal device are controlled (or adjusted), by configuring the information related to the time domain resource of the WUS (or referred to as information related to a monitoring time of the WUS). In this way, the first component of the terminal device may also have a dormant time and a working time. In this way, the power consumption of the first component of the terminal device may be further reduced, so that the first component of the terminal device is more energy-saving.

The monitoring period of the WUS and the monitoring duration within the monitoring period of the WUS may be related to a function of the WUS, specifically as follows.

In one case where:
the WUS is used to wake up the terminal device to monitor a paging message;
the monitoring period of the WUS is the same as a period of the paging message;
there is a first relative time relationship between a position of the monitoring duration within the monitoring period of the WUS and a position of a paging occasion (PO) for monitoring the paging message.

Herein, the WUS being used to wake up the terminal device to monitor the paging message, may specifically mean that: the WUS is used to wake up the terminal device to monitor the paging message by the second component (i.e., the main receiver) of the terminal device.

The monitoring period of the WUS in the information related to the time domain resource of the WUS, may specifically be: indication information that the monitoring period of the WUS is the same as the period of the paging message.

The period of the paging message may be pre-configured by the network device, for example, may be configured by the system information. Correspondingly, if the network device determines that the WUS is used to wake up the terminal device to receive the paging message, the network device may indicate the terminal device by the information related to the time domain resource of the WUS, that the monitoring period of the WUS is the same as the period of the paging message.

The position of the monitoring duration within the monitoring period of the WUS may refer to a starting position of the monitoring duration within the monitoring period of the WUS, or may refer to an ending position of the monitoring duration within the monitoring period of the WUS.

The first relative time relationship may be a time bias. For example, the time bias may be 1 second, 2 seconds, 10 milliseconds, or may be longer or shorter, which will not be listed exhaustively herein.

There being the first relative time relationship between the position of the monitoring duration within the monitoring period of the WUS and the position of the PO for monitoring the paging message, may specifically be: there being the first relative time relationship between a starting position of the monitoring duration within the monitoring period of the WUS and the position of the PO for monitoring the paging message. Alternatively, there is the first relative time relationship between an ending position of the monitoring duration within the monitoring period of the WUS and the position of the PO for monitoring the paging message.

In the case where the information related to the time domain resource of the WUS includes the monitoring period of the WUS and the monitoring duration within the monitoring period of the WUS, the monitoring period of the WUS is specifically the indication information that it is the same as the period of the paging message. The first component of the terminal device may determine that the terminal device needs to be woken up to monitor the paging message this time, based on the indication information that the monitoring period of the WUS is the same as the period of the paging message, and may determine the starting position of the monitoring duration within the monitoring period of the WUS, based on the first relative time relationship and the PO for the paging message. In combination with the aforementioned monitoring period of the WUS, the starting position of the monitoring duration within the monitoring period of the WUS, and the monitoring duration within the monitoring period of the WUS, the first component of the terminal device may periodically monitor the WUS.

In another case where:
the WUS is used to wake up the terminal device to monitor a PDCCH in a DRX ON duration;
the monitoring period of the WUS is the same as a period of DRX;
there is a second relative time relationship between a position of the monitoring duration within the monitoring period of the WUS and a starting time position of DRX monitoring.

Herein, the WUS being used to wake up the terminal device to monitor the physical downlink control channel (PDCCH) in the discontinuous reception (DRX) ON duration, may specifically mean that: the WUS is used to wake up the terminal device to monitor the physical downlink control channel (PDCCH) in the discontinuous reception (DRX) ON duration by the second component (i.e., the main receiver) of the terminal device.

The monitoring period of the WUS in the information related to the time domain resource of the WUS may specifically be: indication information that the monitoring period of the WUS is the same as the period of the DRX.

The period of the DRX may be pre-configured by the network device, for example, may be configured by the system information.

The position of the monitoring duration within the monitoring period of the WUS may refer to a starting position of the monitoring duration, or may refer to an ending position of the monitoring duration.

The second relative time relationship may be a time bias. For example, the time bias may be 1 second, 2 seconds, 10 milliseconds, or may be longer or shorter, which will not be listed exhaustively herein.

That is, when the WUS is used to wake up the terminal device to monitor the PDCCH during DRX ON or not, the working period (i.e., the monitoring period of the WUS) of the first component (i.e., the WUR) of the terminal device may be the same as the period of the DRX. A position of a working time of the WUR (i.e., the starting position or the ending position of the monitoring duration within the monitoring period of the WUS) may have the known second relative time relationship with a position of a starting time of the DRX ON.

In the case where the information related to the time domain resource of the WUS includes the monitoring period of the WUS and the monitoring duration within the monitoring period of the WUS, the monitoring period of the WUS is specifically the indication information that it is the same as the period of the DRX. The first component of the terminal device may determine that the terminal device needs to be woken up this time to monitor the PDCCH within the DRX ON duration based on the indication information that the monitoring period of the WUS is the same as the period of the DRX, and the starting position of the monitoring duration within the monitoring period of the WUS may be determined based on the second relative time relationship and the starting time position of the DRX monitoring; in combination with the monitoring period of the WUS, the starting position of the monitoring duration within the monitoring period of the WUS, and the monitoring duration within the monitoring period of the WUS described above, the first component of the terminal device may periodically monitor the WUS.

Based on the schemes provided in the aforementioned embodiments, the terminal device may receive the information related to the time-frequency resource of the WUS; and then the terminal device may determine the time-frequency resource of the WUS based on the information related to the time-frequency resource of the WUS, and monitor the WUS on the time-frequency resource of the WUS.

It needs to be noted that the information related to the time-frequency resource of the WUS may include at least one of the information related to the frequency domain resource of the WUS and the information related to the time domain resource of the WUS. In a case where only one of the information related to the frequency domain resource of the WUS and the information related to the time domain resource of the WUS is included, the information related to another resource may be default or preset. For example, if the information related to the time-frequency resource of the WUS only includes the information related to the frequency domain resource of the WUS, the terminal device may use a default time domain resource of the WUS, and all possible cases will not be listed exhaustively herein.

On the basis of the aforementioned embodiments, the first information also includes: signal-related information of the WUS.

The signal-related information of the WUS includes at least one of:
information related to a target waveform of the WUS; and
a target modulation manner used by the WUS.

The information related to the target waveform of the WUS includes: the target waveform of the WUS being obtained by modulating based on one of amplitude shift keying (ASK), frequency shift keying (FSK), and orthogonal frequency division multiplexing (OFDM).

That is to say, the target waveform used by the WUS may be a waveform of a signal modulated by any one of the ASK, FSK, and OFDM. The network device may pre-configure for the terminal device, the waveform used by the WUS to be obtained by modulating with any one of the above-mentioned ASK, FSK, and OFDM.

Similarly, the target modulation manner used by the WUS includes one of: binary phase shift keying (BPSK), quadrature phase shift keying (QPSK). That is to say, the network device may configure for the terminal device, the target modulation manner used for the WUS to be the BPSK or QPSK, etc.

The network device how to determine which waveform the terminal device uses for the WUS and/or which modulation manner the terminal device uses for the WUS, may be determined by the network device based on capability information reported by the terminal device. Correspondingly, the method further includes: transmitting, by the terminal device, second information, where the second information includes capability information of the terminal device; the capability information of the terminal device includes at least one of: a waveform supported by the terminal device, and a modulation manner supported by the terminal device. The second information may be transmitted when the terminal device is in the RRC_CONNECTED state, and the second information may be carried by information such as an RRC signaling.

Herein, the waveform supported by the terminal device may specifically refer to: a waveform supported by the first component (i.e., the WUR) of the terminal device. That is, different terminal devices may have first components (i.e., WURs) with different capabilities, and the first components (i.e., the WURs) with different capabilities may support the reception of different waveforms. For example, first components (i.e., WURs) of some terminal devices may support the ASK, first components (i.e., WURs) of some terminal devices may support the FSK, first components (i.e., WURs) of some terminal devices may support the ASK and the FSK, first components (i.e., WURs) of some terminal devices may support the OFDM, and first components (i.e., WURs) of some terminal devices may support the ASK, the FSK and the OFDM. Therefore, the terminal device may report its own capability information including the waveform supported by the terminal device to the network device in advance, so that the network device may configure different target waveforms of WUSs for different terminal devices based on the different capabilities reported by various terminal devices, that is, the network device may transmit WUSs with different waveforms for terminal devices with WURs of different capabilities.

Similarly, different terminal devices may have first components (i.e., WURs) with different capabilities, and the first components (i.e., the WURs) with different capabilities may support different modulation manners. For example, first components (i.e., WURs) of some terminal devices may support the QPSK, first components (i.e., WURs) of some terminal devices may support the BPSK, and first components (i.e., WURs) of some terminal devices may support the QPSK and the BPSK. Therefore, the terminal device may report its own capability information including the modulation manner supported by the terminal device to the network device in advance, so that the network device may configure different target modulation manners for different terminal devices based on the different capabilities reported by various terminal devices, that is, the network device may transmit WUSs obtained in different modulation manners for terminal devices with first components (i.e., WURs) of different capabilities.

On the basis of the foregoing embodiments, the first component of the terminal device may also perform measuring on a reference signal based on a configuration, which is described specifically as follows.

The method further includes: receiving, by the terminal device, third information, where the third information includes measurement configuration information; where the measurement configuration information is used to configure a first component of the terminal device to perform measuring on a reference signal.

The measurement configuration information includes at least one of:
configuration information of a reference signal of a serving cell; and
configuration information of a reference signal of a neighboring cell.

The measurement configuration information includes the configuration information of the reference signal of the serving cell, that is, the measurement configuration information is used to configure a reference signal measured for the serving cell, and specifically may be to configure a time domain resource position and/or a frequency domain resource position of the reference signal measured for the serving cell, etc.; the reference signal may be a CSI-RS (Channel State Information Reference Signal), etc., which will not be exhaustively listed herein.

The measurement configuration information includes the configuration information of the reference signal of the neighboring cell, that is, the measurement configuration information is used to configure a reference signal measured for the neighboring cell (including an intra-frequency neighboring cell or an inter-frequency neighboring cell), and specifically may be to configure a time domain resource position and/or a frequency domain resource position of the reference signal measured for the neighboring cell, etc.

The first component of the terminal device performs the measuring on the reference signal based on the measurement configuration information; the reference signal includes: the reference signal of the serving cell and/or the reference signal of the neighboring cell.

For example, in a case where the measurement configuration information includes the configuration information of the reference signal of the serving cell, the first component of the terminal device performs the measuring on the reference signal of the serving cell based on the measurement configuration information.

As another example, in a case where the measurement configuration information includes the configuration information of the reference signal of the neighboring cell, the first component of the terminal device performs the measuring on the reference signal of the neighboring cell based on the measurement configuration information.

As yet another example, in a case where the measurement configuration information includes the configuration information of the reference signal of the neighboring cell, the first component of the terminal device performs the measuring on the reference signal of the serving cell and the reference signal of the neighboring cell based on the measurement configuration information.

That is to say, the network device may further transmit the configuration of the measurement reference signal of the first component of the terminal device to the terminal device, so that the WUR (i.e., the first component) of the terminal device performs an operation of measuring such as Radio Resource Management (RRM) and Radio Link Management (RLM).

It can be seen that by adopting the above solutions, the terminal device may monitor the WUS on the time-frequency resource of the WUS, and the information related to the time-frequency resource of the WUS is configured by the network device. By configuring the information related to the time-frequency resource of the WUS, the terminal device may perform the monitoring on the WUS in a specified time domain and/or frequency domain position, thereby achieving a more flexible configuration for the WUS while ensuring the energy saving of the terminal device.

Furthermore, by receiving the configurations for the position of the transmission bandwidth of the WUS, the size of the transmission bandwidth, the signal waveform of the WUS, the modulation manner, the measurement configuration of the reference signal, etc., the terminal device may use the WUR to receive the WUS and/or perform the measuring on the reference signal, thereby further ensuring that the configuration of the WUS is more flexible and is adaptable to more scenarios, while also ensuring the energy-saving effect of the terminal device.

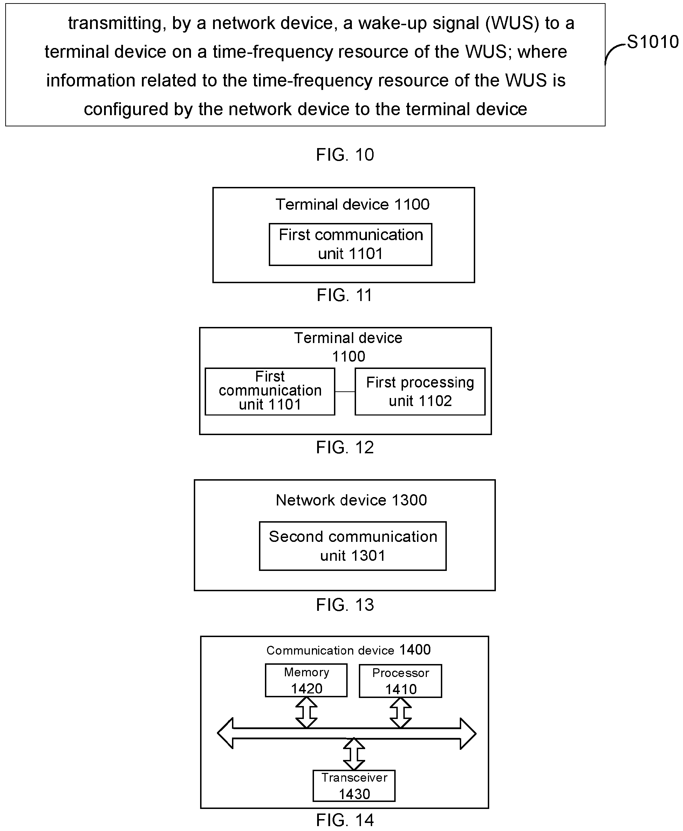

FIG. 10 is a schematic flowchart of an information transmission method according to an embodiment of the present application. The method may optionally be applied to the system shown in FIG. 1, but is not limited thereto. The method includes at least a portion of the following contents.

S1010, a network device transmits a WUS to a terminal device on a time-frequency resource of the WUS; where information related to the time-frequency resource of the WUS is configured by the network device to the terminal device.

Before performing S1010, the method may further include: transmitting, by the network device, first information to the terminal device, where the first information includes the information related to the time-frequency resource of the WUS.

Herein, the first information may be carried by any one of an RRC (Radio Resource Control) signaling, DCI (Downlink Control Information), or a system message.

Then, S1010 may be performed, and the network device transmits the WUS to the terminal device on the time-frequency resource of the WUS.

The information related to the time-frequency resource of the WUS includes at least one of: information related to a frequency domain resource of the WUS; and information related to a time domain resource of the WUS.

Regarding the information related to the frequency domain resource of the WUS, the WUS may occupy a portion of a spectrum of a main system (i.e., a frequency domain resource of the main system, or referred to as a working frequency band of the main system, or referred to as a working bandwidth of the main system), or the WUS may occupy a segment of dedicated spectrum resource(i.e., dedicated frequency domain resource). The WUS may be used to wake up the terminal device, so that the terminal device transmits data and/or monitors a paging message. In a possible implementation, the WUS may carry relevant indication information, and the relevant indication information is used to indicate whether the terminal device is woken up, that is, whether the terminal device monitoring the WUS is woken up. A form of the relevant indication information carried in the WUS forementioned may vary according to different actual situations. For example, the relevant indication information may include an identity of the terminal device, an identity of a terminal group, an indication bit, or the like. The indication bit may be a certain bit in a bit map, and a value of the bit may be used to indicate whether to wake up the terminal device; for example, a first value indicates to wake up the terminal device, and a second value indicates not to wake up the terminal device. The first value is different from the second value, for example, the first value is 1 and the second value is 0, or vice versa. In addition, the indication bit may correspond to one terminal device or may correspond to one terminal device group, which is not exhaustively listed herein. The specific content of the indication relevant information is not limited in this embodiment, and as long as it can indicate the terminal device to wake up the second component or not, it is within the protection scope of this embodiment and will not be exhaustively listed herein. In another possible implementation, the WUS may not carry the relevant indication information.

Specifically, the information related to the frequency domain resource of the WUS may include at least one of: position indication information of a transmission bandwidth of the WUS; a size of the transmission bandwidth of the WUS; a subcarrier spacing of the WUS; and a length of a cyclic prefix (CP) of the WUS.

The forementioned contents that may be included in the information related to the frequency domain resource of the WUS are described respectively below.

The position indication information of the transmission bandwidth of the WUS includes one of:
first position indication information, where the first position indication information is used to indicate a relative relationship between a position of the transmission bandwidth of the WUS and a preset frequency domain range;
second position indication information, where the second position indication information is used to indicate a relative relationship between the position of the transmission bandwidth of the WUS and a first reference frequency point;
third position indication information, where the third position indication information is used to indicate a position of a first-type frequency point in the transmission bandwidth of the WUS.

The above three types of position indication information are described specifically below, respectively.

In a possible implementation, the position of the transmission bandwidth of the WUS may be related to the preset frequency domain range.

The preset frequency domain range being preset, may mean that: the preset frequency domain range is pre-configured or pre-saved by both the terminal device and the network device.

Alternatively, the preset frequency domain range is obtained by the network device itself, and the preset frequency domain range may be transmitted to the terminal device, and correspondingly, the method further includes: configuring, by the network device, the preset frequency domain range to the terminal device. The preset frequency domain range may be carried by system information; or the preset frequency domain range may be carried by a RRC signaling or DCI.

Alternatively, the preset frequency domain range may also be configured in other manners, which will not be listed exhaustively in this embodiment.

The preset frequency domain range may include: an initial Downlink (DL) Bandwidth Part (BWP).

The first position indication information includes one of:
the transmission bandwidth of the WUS being located within the preset frequency domain range, and the first-type frequency point in the transmission bandwidth of the WUS being located at a same position as a first-type frequency point in the preset frequency domain range;
the transmission bandwidth of the WUS being located within the preset frequency domain range, and there being a first frequency offset between the first-type frequency point in the transmission bandwidth of the WUS and a second reference frequency point in the preset frequency domain range;
the transmission bandwidth of the WUS being located outside the preset frequency domain range, and there being a second frequency offset between the first-type frequency point in the transmission bandwidth of the WUS and the second reference frequency point in the preset frequency domain range.

Specifically, the transmission bandwidth of the WUS being located within the preset frequency domain range, and the first-type frequency point in the transmission bandwidth of the WUS being located at the same position as the first-type frequency point in the preset frequency domain range, may include the following cases depending on the first-type frequency point being different.

Case 1: the first-type frequency point is a lowest frequency point. The transmission bandwidth of the WUS being located within the preset frequency domain range, and the first-type frequency point in the transmission bandwidth of the WUS being located at the same position as the first-type frequency point in the preset frequency domain range, specifically means that: the transmission bandwidth of the WUS is located within the preset frequency domain range, and a position of the lowest frequency point in the transmission bandwidth of the WUS is the same as a position of the lowest frequency point of the preset frequency domain range.

Case 2: the first-type frequency point is a highest frequency point. The transmission bandwidth of the WUS being located within the preset frequency domain range, and the first-type frequency point in the transmission bandwidth of the WUS being located at the same position as the first-type frequency point in the preset frequency domain range, specifically means that: the transmission bandwidth of the WUS is located within the preset frequency domain range, and a position of the highest frequency point in the transmission bandwidth of the WUS is the same as a position of the highest frequency point of the preset frequency domain range.

Case 3: the first-type frequency point is a central frequency point. The transmission bandwidth of the WUS being located within the preset frequency domain range, and the first-type frequency point in the transmission bandwidth of the WUS being located at the same position as the first-type frequency point in the preset frequency domain range, specifically means that: the transmission bandwidth of the WUS is located within the preset frequency domain range, and a position of the central frequency point in the transmission bandwidth of the WUS is the same as a position of the central frequency point of the preset frequency domain range.

Herein, the first-type frequency point may include one of: the lowest frequency point, the highest frequency point, and the central frequency point. A type of the first-type frequency point may be configured by the network device, or may be preset. It should be understood that in addition to the three types listed above, the first-type frequency point may also be other frequency points which will not be listed exhaustively, and as long as the terminal device and the network device both define the type of the first-type frequency point as the same, the type of the first-type frequency point is within the protection scope of this embodiment. For example, the terminal device and the network device both set or define the first-type frequency point as the lowest frequency point, or both set or define the first-type frequency point as the central frequency point, etc.

The above-mentioned preset frequency domain range has been described above, and may be an initial DL BWP.

In the above Case 1, the transmission bandwidth of the WUS being located within the preset frequency domain range, and the position of the lowest frequency point in the transmission bandwidth of the WUS being the same as the position of the lowest frequency point of the preset frequency domain range, which may be shown in FIG. 6a, specifically means that: the transmission bandwidth of the WUS is located within the initial DL BWP, and the position of the lowest frequency point in the transmission bandwidth of the WUS being aligned with the position of the lowest frequency point of the initial DL BWP.

In the above Case 2, the transmission bandwidth of the WUS being located within the preset frequency domain range, and the position of the highest frequency point in the transmission bandwidth of the WUS is the same as the position of the highest frequency point of the preset frequency domain range, referring to FIG. 6b, specifically means that: the transmission bandwidth of the WUS is located within the initial DL BWP, and the position of the highest frequency point of the transmission bandwidth of the WUS is aligned with the position of the highest frequency point of the initial DL BWP.

In the above Case 3, the transmission bandwidth of the WUS being located within the preset frequency domain range, and a position of the central frequency point in the transmission bandwidth of the WUS being the same as a position of the central frequency point of the preset frequency domain range, referring to FIG. 6c, specifically means that: the transmission bandwidth of the WUS is located within the initial DL BWP, and the position of the central frequency point of the transmission bandwidth of the WUS is aligned with the position of the central frequency point of the initial DL BWP.

The transmission bandwidth of the WUS being located within the preset frequency domain range, and there being a first frequency offset between the first-type frequency point in the transmission bandwidth of the WUS and a second reference frequency point in the preset frequency domain range, may include the following cases depending on the first-type frequency point being different.

Case 4: the first-type frequency point is the lowest frequency point. The transmission bandwidth of the WUS is within the preset frequency domain range, and there is the first frequency offset between the lowest frequency point of the transmission bandwidth of the WUS and the second reference frequency point of the preset frequency domain range.

Case 5: the first-type frequency point is the highest frequency point. The transmission bandwidth of the WUS is within the preset frequency domain range, and there is the first frequency offset between the highest frequency point in the transmission bandwidth of the WUS and the second reference frequency point of the preset frequency domain range.

Case 6: the first-type frequency point is the central frequency point. The transmission bandwidth of the WUS is within the preset frequency domain range, and there is the first frequency offset between the central frequency point of the transmission bandwidth of the WUS and the second reference frequency point of the preset frequency domain range.

Herein, the first-type frequency point may include one of: the lowest frequency point, the highest frequency point, and the central frequency point. The type of the first-type frequency point is the same as the description in the aforementioned embodiment and will not be repeated herein.

The second reference frequency point is a frequency point within the preset frequency domain range. The second reference frequency point may be: any frequency point within the preset frequency domain range. More specifically, the second reference frequency point is one of: the lowest frequency point of the preset frequency domain range; the highest frequency point of the preset frequency domain range; or the central frequency point of the preset frequency domain range. It should be understood that the second reference frequency point may also be other frequency points within the preset frequency domain range except for the central frequency point. As long as the terminal device and the network device have the same definition for the second reference frequency point, it is within the protection scope of this embodiment.

Herein, the lowest frequency point of the preset frequency domain range is: a frequency point in a physical resource block (PRB) with a lowest frequency in the preset frequency domain range; and/or, the highest frequency point of the preset frequency domain range is: a frequency point in a PRB with a highest frequency in the preset frequency domain range.

Specifically, a PRB may correspond to 12 continuous subcarriers in the frequency domain, and a frequency domain range of each subcarrier may be fixed (e.g., 15 khz). Correspondingly, the frequency point in the PRB with the lowest frequency in the preset frequency domain range may refer to a frequency point corresponding to a subcarrier with a lowest frequency in the PRB with the lowest frequency in the preset frequency domain range; or may refer to a central frequency point in the PRB with the lowest frequency in the preset frequency domain range; or may also refer to a frequency point corresponding to a subcarrier with a highest frequency in the PRB with the lowest frequency in the preset frequency domain range. An exhaustive list of all its possible cases will not be repeated here.

Herein, the frequency point corresponding to the subcarrier with the lowest frequency in the PRB with the lowest frequency in the preset frequency domain range, may specifically refer to: a central frequency point corresponding to the subcarrier with the lowest frequency in the PRB with the lowest frequency in the preset frequency domain range. The frequency point corresponding to the subcarrier with the highest frequency in the PRB with the highest frequency of the preset frequency domain range may specifically refer to: a central frequency point corresponding to the subcarrier with the highest frequency in the PRB with the highest frequency of the preset frequency domain range.

Similarly, the frequency point in the PRB with the highest frequency in the preset frequency domain range may refer to a central frequency point of the PRB with the highest frequency in the preset frequency domain range; or may also refer to a frequency point corresponding to a subcarrier with a highest frequency in the PRB with the highest frequency in the preset frequency domain range; or may refer to a central frequency point in the PRB with the highest frequency in the preset frequency domain range. An exhaustive list of all its possible cases will not be repeated here.

The first frequency offset may vary according to actual conditions.

For example, in the above Case 4, the first-type frequency point is the lowest frequency point, and the second reference frequency point is the frequency point in the PRB with the lowest frequency in the preset frequency domain range. The transmission bandwidth of the WUS being located within the preset frequency domain range, and there being the first frequency offset between the lowest frequency point of the transmission bandwidth of the WUS and the second reference frequency point in the preset frequency domain range, referring to FIG. 7a, specifically means that: the transmission bandwidth of the WUS is located within the initial DL BWP, and there is the first frequency offset between a position of the lowest frequency point of the transmission bandwidth of the WUS and a frequency point (specifically, a frequency point corresponding to a subcarrier with a lowest frequency) in the PRB with the lowest frequency in the initial DL BWP. Herein, the first frequency offset may be configured according to actual conditions. For example, the first frequency offset may be 100 Khz, 1.0 Khz, or may be larger or smaller, which is not exhaustively listed herein.

As another example, in the above Case 5, the first-type frequency point is the highest frequency point, and the second reference frequency point is the frequency point in the PRB with the highest frequency in the preset frequency domain range. The transmission bandwidth of the WUS being located within the preset frequency domain range, and there being the first frequency offset between the highest frequency point in the transmission bandwidth of the WUS and the second reference frequency point of the preset frequency domain range, which is shown in FIG. 7b, specifically means that: the transmission bandwidth of the WUS is located within the initial DL BWP, and there is the first frequency offset between a position of the highest frequency point in the transmission bandwidth of the WUS and the frequency point (specifically, a frequency point corresponding to a subcarrier with a highest frequency) in the PRB with the highest frequency in the initial DL BWP. Herein, the first frequency offset may be set according to actual conditions. For example, the first frequency offset may be 200 Khz, 1.8 Khz, or may be larger or smaller, which is not exhaustively listed herein.

As another example, in the above Case 6, the first-type frequency point is the central frequency point, and the second reference frequency point is the frequency point in the PRB with the highest frequency in the preset frequency domain range. The transmission bandwidth of the WUS being located within the preset frequency domain range, and there being the first frequency offset between the central frequency point in the transmission bandwidth of the WUS and the second reference frequency point of the preset frequency domain range, specifically means that: the transmission bandwidth of the WUS is located within the initial DL BWP, and there is the first frequency offset between a position of the central frequency point in the transmission bandwidth of the WUS and the frequency point (specifically, a frequency point corresponding to a subcarrier with a highest frequency) in the PRB with the highest frequency in the initial DL BWP. Herein, the first frequency offset may be set according to actual conditions. For example, the first frequency offset may be 150 Khz, 1.5 Khz, or may be larger or smaller, which is not exhaustively listed herein.

In the above Case 1 to Case 6, the position of the transmission bandwidth of the WUS is located within the initial DL BWP, that is, the WUS occupies a portion of the spectrum of the main system, that is, occupies a portion of the frequency domain resource of the main system.

The transmission bandwidth of the WUS being located outside the preset frequency domain range, and there being the second frequency offset between the first-type frequency point in the transmission bandwidth of the WUS and the second reference frequency point in the preset frequency domain range may include the following cases depending on the first-type frequency point being different.

Case 7: the first-type frequency point is the lowest frequency point. The transmission bandwidth of the WUS is located outside the preset frequency domain range, and there is the second frequency offset between the lowest frequency point of the transmission bandwidth of the WUS and the second reference frequency point in the preset frequency domain range.

Case 8: the first-type frequency point is the highest frequency point. The transmission bandwidth of the WUS is located outside the preset frequency domain range, and there is the second frequency offset between the highest frequency point of the transmission bandwidth of the WUS and the second reference frequency point in the preset frequency domain range.

Case 9: the first-type frequency point is a central frequency point. The transmission bandwidth of the WUS is located outside the preset frequency domain range, and there is the second frequency offset between the central frequency point of the transmission bandwidth of the WUS and the second reference frequency point in the preset frequency domain range.

Herein, the first-type frequency point may include one of: the lowest frequency point, the highest frequency point, and the central frequency point. The type of the first-type frequency point is the same as the description in the aforementioned embodiment, and will not be repeated herein.

The second reference frequency point is a frequency point within the preset frequency domain range. The second reference frequency point may be: any frequency point within the preset frequency domain range. More specifically, the second reference frequency point is one of: a lowest frequency point of the preset frequency domain range; a highest frequency point of the preset frequency domain range; or a central frequency point of the preset frequency domain range. It should be understood that the second reference frequency point may also be other frequency points within the preset frequency domain range except for the central frequency point. As long as the terminal device and the network device have the same definition for the second reference frequency point, it may be within the protection scope of this embodiment.

Herein, the lowest frequency point of the preset frequency domain range is: the lowest frequency point of the preset frequency domain range is: a frequency point in a physical resource block (PRB) with a lowest frequency in the preset frequency domain range; and/or the highest frequency point of the preset frequency domain range is: a frequency point in a PRB with a highest frequency in the preset frequency domain range. The detailed description of the lowest frequency point of the preset frequency domain range and the highest frequency point of the preset frequency domain range are the same as the description in the aforementioned embodiment, and are not repeated herein.

In an example of the above Case 7, the first-type frequency point is the lowest frequency point; the second reference frequency point is the lowest frequency point of the preset frequency domain range, for example, the second reference frequency point is a frequency point corresponding to a subcarrier with a lowest frequency in the PRB with the lowest frequency in the initial DL BWP.

The transmission bandwidth of the WUS being located outside the preset frequency domain range, and there being the second frequency offset between the lowest frequency point in the transmission bandwidth of the WUS and the second reference frequency point in the preset frequency domain range, which is shown in FIG. 8a, may be: the transmission bandwidth of the WUS being located outside the initial DL BWP, and a position of the lowest frequency point of the transmission bandwidth of the WUS being a position after the second frequency offset is applied to the lowest frequency point (such as a frequency point corresponding to a subcarrier with a lowest frequency in the PRB with the lowest frequency) in the initial DL BWP (specifically, it may be a position after subtracting the second frequency offset from the lowest frequency point in the initial DL BWP). The second frequency offset may be set according to actual situations, such as 100 Khz, 50 Khz, etc.

In another example of the above Case 7, the first-type frequency point is the lowest frequency point; the second reference frequency point is the highest frequency point of the preset frequency domain range, for example, the second reference frequency point is a frequency point corresponding to a subcarrier with a highest frequency in the PRB with the highest frequency in the preset frequency domain range.

The transmission bandwidth of the WUS being located outside the preset frequency domain range, and there being the second frequency offset between the highest frequency point in the transmission bandwidth of the WUS and the second reference frequency point in the preset frequency domain range, which is shown in FIG. 8b, may be: the transmission bandwidth of the WUS being located outside the initial DL BWP, and a position of the lowest frequency point in the transmission bandwidth of the WUS being a position after the second frequency offset is applied to the highest frequency point (such as a frequency point corresponding to a subcarrier with a highest frequency in the PRB with the highest frequency) of the initial DL BWP (specifically, it may be a position after adding the second frequency offset to the highest frequency point of the initial DL BWP). The second frequency offset may be set according to actual situations, such as 150 Khz, 80 Khz, etc.

In an example of the above Case 8, the first-type frequency point is the highest frequency point, and the second reference frequency point is the lowest frequency point of the preset frequency domain range; the transmission bandwidth of the WUS being located outside the preset frequency domain range, and there being the second frequency offset between the highest frequency point of the transmission bandwidth of the WUS and the second reference frequency point in the preset frequency domain range, which is shown in FIG. 8c, may be: the transmission bandwidth of the WUS being located outside the initial DL BWP, and a position of the highest frequency point of the transmission bandwidth of the WUS being a position after the second frequency offset is applied to the lowest frequency point of the initial DL BWP (specifically, it may be a position after subtracting the second frequency offset from the lowest frequency point of the initial DL BWP). The second frequency offset may be set according to actual situations, such as 50 Khz, 20 Khz, etc.

In another example of the above Case 8, the first-type frequency point is a highest frequency point, and the second reference frequency point is the highest frequency point of the preset frequency domain range; the transmission bandwidth of the WUS being located outside the preset frequency domain range, and there being the second frequency offset between the highest frequency point in the transmission bandwidth of the WUS and the second reference frequency point in the preset frequency domain range may be: the transmission bandwidth of the WUS being located outside the initial DL BWP, and a position of the highest frequency point in the transmission bandwidth of the WUS being a position after the second frequency offset is applied to the highest frequency point of the initial DL BWP (specifically, it may be a position after adding the second frequency offset to the highest frequency point of the initial DL BWP). The second frequency offset may be set according to actual situations, such as 50 Khz, 20 Khz, etc.

In an example of the above Case 9, the first-type frequency point is a central frequency point, and the second reference frequency point is the central frequency point of the preset frequency domain range. The transmission bandwidth of the WUS being located outside the preset frequency domain range, and there being the second frequency offset between the central frequency point of the transmission bandwidth of the WUS and the second reference frequency point in the preset frequency domain range, may be: the transmission bandwidth of the WUS being located outside the initial DL BWP, and a position after the second frequency offset is applied to the central frequency point of the initial DL BWP (it may be a position after adding or subtracting the second frequency offset to the central frequency point of the initial DL BWP) being the central frequency point in the transmission bandwidth of the WUS. The second frequency offset may be set according to actual situations, such as 250 Khz, 500 Khz, etc.

In the above Case 7 to Case 9, the position of the transmission bandwidth of the WUS may be configured outside the initial DL BWP, and the lowest frequency point of the initial DL BWP (for example, a subcarrier with a lowest frequency in the PRB with the lowest frequency in the initial DL BWP) or the highest frequency point of the initial DL BWP (for example, a subcarrier with a highest frequency in the PRB with the highest frequency in the initial DL BWP) or the central frequency point of the initial DL BWP may be used as a third reference frequency point; and the position of the transmission bandwidth of the WUS is determined by the third reference frequency point with a frequency offset. In the above cases, the WUS may occupy a dedicated frequency domain resource, that is, may occupy a frequency domain range outside the working bandwidth of the main system; of course, in the above cases, the WUS may also occupy a portion of the frequency domain resource of the main system.

The above embodiment is a method for determining the position of the transmission bandwidth of the WUS based on the preset frequency domain range, that is, the initial DL BWP.

In a possible implementation, the position of the transmission bandwidth of the WUS may also be determined based on a frequency domain position of the first reference frequency point.

The second position indication information includes: a third frequency offset between the first-type frequency point in the transmission bandwidth of the WUS and the first reference frequency point. Herein, the first reference frequency point is one of: a point A, a frequency starting point position of a cell carrier, a frequency point in a frequency domain range occupied by a cell defining synchronization signal block (CD-SSB).

The method further includes: configuring, by the network device to the terminal device, a frequency domain position of the point A and/or the frequency starting point position of the cell carrier. That is, the network device may pre-configure a frequency domain position of the point A and/or the frequency starting point position of the cell carrier to the terminal device. Herein, the frequency domain position of the point A and/or the frequency starting point position of the cell carrier may be carried by the system information.

The first-type frequency point may include one of: a lowest frequency point, a highest frequency point, and a central frequency point. A type of the first-type frequency point may be configured by the network device to the terminal device. It should be understood that in addition to the three types listed above, the first-type frequency point may also be other frequency points which will not be listed exhaustively, and as long as the terminal device and the network device both define the type of the first-type frequency point as the same, it is within the protection scope of this embodiment. For example, the terminal device and the network device both set or define the first-type frequency point as the lowest frequency point, or both set or define the first-type frequency point as the central frequency point, etc.

The third frequency offset may be determined by the network device according to actual conditions and transmitted to the terminal device in the second position indication information.

The third frequency offset between the first-type frequency point in the transmission bandwidth of the WUS and the first reference frequency point may include one of: a third frequency offset between the lowest frequency point in the transmission bandwidth of the WUS and the first reference frequency point; a third frequency offset between the highest frequency point in the transmission bandwidth of the WUS and the first reference frequency point; a third frequency offset between the central frequency point in the transmission bandwidth of the WUS and the first reference frequency point.

The first reference frequency point is taken as the point A as an example for explanation below.

Herein, the point A is a frequency reference point used to indicate a position of a carrier. A position of the point A may be configured by the network device. For example, the frequency domain position of the point A may be carried in the system information.

There is the third frequency offset between the lowest frequency point of the transmission bandwidth of the WUS and the first reference frequency point, as shown in FIG. 9a, there is the third frequency offset between a position of the lowest frequency point in the transmission bandwidth of the WUS and the frequency domain position of the point A. Herein, the third frequency offset may be set according to actual conditions, for example, the third frequency offset may be 200 Khz, or may be larger or smaller, which will not be listed exhaustively herein.

There is the third frequency offset between the highest frequency point of the transmission bandwidth of the WUS and the first reference frequency point, for example, there is the third frequency offset between a position of the highest frequency point of the transmission bandwidth of the WUS and the frequency domain position of the point A. Herein, the third frequency offset may be 300 Khz, or may be larger or smaller, which will not be listed exhaustively herein.

There is the third frequency offset between the central frequency point of the transmission bandwidth of the WUS and the first reference frequency point, for example, there is the third frequency offset between a position of the central frequency point of the transmission bandwidth of the WUS and the frequency domain position of the point A. Herein, the third frequency offset may be 100 Khz, or may be larger or smaller, which will not be listed exhaustively herein.

The first reference frequency point is taken as the frequency starting point position of the cell carrier as an example for explanation below.

There is the third frequency offset between the lowest frequency point of the transmission bandwidth of the WUS and the first reference frequency point, as shown in FIG. 9b, within a bandwidth of the cell carrier, a position by applying the third frequency offset to the frequency starting point position of the cell carrier is used as the position of the lowest frequency point of the transmission bandwidth of the WUS. Herein, the third frequency offset may be 200 Khz, or may be larger or smaller, which will not be listed exhaustively herein.

There is the third frequency offset between the highest frequency point of the transmission bandwidth of the WUS and the first reference frequency point. That is to say, within the bandwidth of the cell carrier, a position by applying the third frequency offset to the frequency starting point position of the cell carrier is used as the position of the highest frequency point of the transmission bandwidth of the WUS. Herein, the third frequency offset may be set according to actual situations, for example, may be 400 Khz, or larger or smaller, which will not be listed exhaustively herein.

There is the third frequency offset between the central frequency point of the transmission bandwidth of the WUS and the first reference frequency point. That is to say, within the bandwidth of the cell carrier, a position by applying the third frequency offset to the frequency starting point position of the cell carrier is used as the position of the central frequency point of the transmission bandwidth of the WUS. Herein, the third frequency offset may be 400 Khz, or may be larger or smaller, which will not be listed exhaustively herein.

Herein, the frequency starting point position of the cell carrier may be configured by the network device, or may be preset. For example, the terminal device may receive a system message (system information), and acquire the frequency starting point position of the cell carrier from the system message. Herein, the cell may be a serving cell in which the terminal device is located.

The first reference frequency point is taken as the frequency point in the frequency domain range occupied by the CD-SSB as an example for explanation below.

Herein, the CD-SSB is a signal occupying a segment of frequency domain range. That is, the terminal device may determine the position of the transmission bandwidth of the WUS based on a certain frequency point in the frequency domain range occupied by the CD-SSB.

There is the third frequency offset between the lowest frequency point of the transmission bandwidth of the WUS and the first reference frequency point. That is to say, the network device will configure the above-mentioned third frequency offset for the terminal device, and the third frequency offset is a frequency offset between the lowest frequency point of the transmission bandwidth of the WUS and a frequency point in the frequency domain range occupied by the CD-SSB. Herein, the third frequency offset may be 200 Khz, or may be larger or smaller, which will not be listed exhaustively herein.

Alternatively, there is the third frequency offset between the highest frequency point of the transmission bandwidth of the WUS and the first reference frequency point. That is to say, the network device will configure the above-mentioned third frequency offset for the terminal device, and the third frequency offset is a frequency offset between the highest frequency point of the transmission bandwidth of the WUS and a frequency point in the frequency domain range occupied by the CD-SSB. Herein, the third frequency offset may be 20 Khz, or may be larger or smaller, which will not be listed exhaustively herein.

Herein, the frequency point in the frequency domain range occupied by the CD-SSB may be: a central frequency point in the frequency domain range occupied by the CD-SSB; or may be a lowest frequency point in the frequency domain range occupied by the CD-SSB; or may be a highest frequency point in the frequency domain range occupied by the CD-SSB, or the like, which will not be listed exhaustively herein.

In methods provided in the above embodiments, the position of the transmission bandwidth of the WUS may be within the working bandwidth of the main system. Herein, the main system may be a main system in which the main receiver of the terminal device works, for example, may be an NR system.

In a possible implementation, the position indication information of the transmission bandwidth of the WUS includes: third position indication information, and the third position indication information is used to indicate a position of a first-type frequency point in the transmission bandwidth of the WUS.

The first-type frequency point may include one of: a lowest frequency point, a highest frequency point, and a central frequency point. A type of the first-type frequency point may be configured by the network device, or may be preset. It should be understood that in addition to the three types listed above, the first-type frequency point may also be other frequency points, which is not listed exhaustively, and as long as the terminal device and the network device both define the type of the first-type frequency point as the same, it is within the protection scope of this embodiment. For example, the terminal device and the network device both set or define the first-type frequency point as the lowest frequency point, or both set or define the first-type frequency point as the central frequency point, etc.

In this implementation, the third position indication information may directly carry a specific frequency position of the first-type frequency point.

This implementation is particularly applicable for a scenario where the position of the transmission bandwidth of the WUS is outside the working bandwidth of the main system. The transmission bandwidth of the WUS may be on a segment of dedicated frequency domain range (or spectrum resource). Of course, in this implementation, the position of the transmission bandwidth of the WUS may also be located within the working bandwidth of the main system, that is, the transmission bandwidth of the WUS may occupy a portion of the working bandwidth of the main system, which is not limited thereto. Herein, the working bandwidth of the main system may be configured by the network device, for example, may be acquired by the terminal device from the received system information.

The position indication information of the transmission bandwidth of the WUS is described in detail in above embodiments. The size of the transmission bandwidth of the WUS is further described as follows.

The size of the transmission bandwidth of the WUS may be pre-configured, for example, may be directly written into the terminal device and the network device. Alternatively, the size of the transmission bandwidth of the WUS may be configured by the network device to the terminal device, for example, may be configured by the network device to the terminal device by the system information.

The size of the transmission bandwidth of the WUS is related to a radius of a serving cell in which the terminal device is located, and/or a transmission load of the WUS. The larger the transmission bandwidth of the WUS is, the higher the transmission rate may be supported, and the more the WUS loads are supported for transmission. The larger the transmission bandwidth of the WUS also facilitates the enhancement of the demodulation performance of the WUS, thereby increasing the coverage of the WUS. Therefore, the network device may configure the size of the transmission bandwidth of the WUS, according to factors such as the radius of the cell and the load of the WUS transmission.

The size of the transmission bandwidth of the WUS is expressed in one of frequency domain units of: Khz, Mhz, PRB, and a number of subcarriers. Herein, the frequency domain unit may be the default for both the terminal device and the network device, that is, be pre-determined by both the terminal device and the network device; or may be pre-indicated by the network device.

The subcarrier spacing of the WUS may also be preset, or configured by the network device to the terminal device. Herein, the subcarrier spacing of the WUS may be the same as or different from a subcarrier spacing used by the second component (i.e., the main receiver) of the terminal device.

Furthermore, the length of the CP of the WUS may also be preset, or configured by the network device to the terminal device; similarly, the length of the CP of the WUS may be the same as or different from a length of a CP used by the second component (i.e., the main receiver) of the terminal device.

In the above embodiments, all contents that may be included in the information related to the frequency domain resource of the WUS are described relevantly. In the actual processing, the information related to the frequency domain resource of the WUS may include all of the aforementioned contents, or may include a portion of the aforementioned contents. In a preferred example, the information related to the frequency domain resource of the WUS at least includes the position indication information of the transmission bandwidth of the WUS.

For example, the information related to the frequency domain resource of the WUS may only include the position indication information of the transmission bandwidth of the WUS. As another example, the information related to the frequency domain resource of the WUS may only include the position indication information of the transmission bandwidth of the WUS and the size of the transmission bandwidth of the WUS.

It should be understood that manners using in combination with at least one of the aforementioned information related to the frequency domain resource of the WUS are within the protection scope of this embodiment, but will not be exhaustively listed.

The information related to the time domain resource of the WUS in the information related to the time-frequency resource of the WUS is described below.

A configuration of the information related to the time-frequency resource of the WUS is mainly for further controlling a working duration of the first component (i.e., the WUR) of the terminal device, thereby further reducing the power consumption of the first component of the terminal device. To explain specifically, although the power consumption of the first component (i.e., the WUR) of the terminal device is already very low, in order to further reduce the power consumption of the WUR, the working time of the WUR may be configured, so that the first component (i.e., the WUR) of the terminal device starts to receive the WUS or perform other operations (such as measuring, depending on whether the WUR will be supported to perform measuring in the future) only within a portion of the duration, and the first component (i.e., the WUR) of the terminal device may also enter the dormant state at other times, thereby achieving the purpose of further power saving or energy saving.

The information related to the time domain resource of the WUS includes at least one of: a monitoring period of the WUS; and a monitoring duration within the monitoring period of the WUS.

A monitoring period of the WUS may be N time units, where N may be a value greater than or equal to 0. The time unit may be any one of a symbol, a slot, a microsecond, a millisecond, etc., as long as both the terminal device and the network device use the same unit.

The monitoring duration within the monitoring period of the WUS may be M time units, where M may be a value greater than or equal to 0. The time unit may be any one of a symbol, a slot, a microsecond, a millisecond, etc., as long as both the terminal device and the network device use the same unit.

Exemplarily, the information related to the time domain resource of the WUS may only include the monitoring period of the WUS.

That is, the network device may control a working duration of the first component (i.e., the WUR) of the terminal device by configuring the monitoring period of the WUS for the terminal device, that is, the aforementioned monitoring period of the WUS is used as a working period of the first component of the terminal device, so that the first component of the terminal device may also have a dormant time and a working time. In this way, the power consumption of the first component of the terminal device may be further reduced, so that the first component of the terminal device is more energy-saving.

Exemplarily, the information related to the time domain resource of the WUS may include the monitoring period of the WUS and the monitoring duration within the monitoring period of the WUS.

In this implementation, the network device may control (or adjust) the working period (i.e., the monitoring period of the WUS) and the working duration within the working period (i.e., the monitoring duration within the monitoring period of the WUS) of the first component (i.e., the WUR) of the terminal device, by configuring the information related to the time domain resource of the WUS (or referred to as information related to a monitoring time of the WUS) for the terminal device. In this way, the first component of the terminal device may also have a dormant time and a working time. In this way, the power consumption of the first component of the terminal device may be further reduced, so that the first component of the terminal device is more energy-saving.

The monitoring period of the WUS and the monitoring duration within the monitoring period of the WUS may be related to a function of the WUS, specifically as follows.

In one case where:
the WUS is used to wake up the terminal device to monitor a paging message;
the monitoring period of the WUS is the same as a period of the paging message;
there is a first relative time relationship between a position of the monitoring duration within the monitoring period of the WUS and a position of a paging occasion (PO) for monitoring the paging message.

Herein, the WUS being used to wake up the terminal device to monitor the paging message, may specifically mean that: the WUS is used to wake up the terminal device to monitor the paging message by the second component (i.e., the main receiver) of the terminal device.

The monitoring period of the WUS in the information related to the time domain resource of the WUS, may specifically be: indication information that the monitoring period of the WUS is the same as the period of the paging message.

The period of the paging message may be pre-configured by the network device, for example, may be configured by the system information. Correspondingly, if the network device determines that the WUS is used to wake up the terminal device to receive the paging message, the network device may indiacte the terminal device by the information related to the time domain resource of the WUS, that the monitoring period of the WUS is the same as the period of the paging message.

The position of the monitoring duration within the monitoring period of the WUS may refer to a starting position of the monitoring duration within the monitoring period of the WUS, or may refer to an ending position of the monitoring duration within the monitoring period of the WUS.

The first relative time relationship may be a time bias. For example, the time bias may be 1 second, 2 seconds, 10 milliseconds, or may be longer or shorter, which will not be listed exhaustively herein.

There being the first relative time relationship between the position of the monitoring duration within the monitoring period of the WUS and the position of the PO for monitoring the paging message, may specifically be: there being the first relative time relationship between a starting position of the monitoring duration within the monitoring period of the WUS and the position of the PO for monitoring the paging message. Alternatively, there is the first relative time relationship between an ending position of the monitoring duration within the monitoring period of the WUS and the position of the PO for monitoring the paging message.

In another case where:
the WUS is used to wake up the terminal device to monitor a PDCCH in a DRX ON duration;
the monitoring period of the WUS is the same as a period of DRX;
there is a second relative time relationship between a position of the monitoring duration within the monitoring period of the WUS and a starting time position of DRX monitoring.

Herein, the WUS being used to wake up the terminal device to monitor the physical downlink control channel (PDCCH) in the discontinuous reception (DRX) ON duration, may specifically mean that: the WUS is used to wake up the terminal device to monitor the physical downlink control channel (PDCCH) in the discontinuous reception (DRX) ON duration by the second component (i.e., the main receiver) of the terminal device.

The monitoring period of the WUS in the information related to the time domain resource of the WUS may specifically be: indication information that the monitoring period of the WUS is the same as the period of the DRX.

The period of the DRX may be pre-configured by the network device, for example, may be configured by the system information.

The position of the monitoring duration within the monitoring period of the WUS may refer to a starting position of the monitoring duration, or may refer to an ending position of the monitoring duration.

The second relative time relationship may be a time bias. For example, the time bias may be 1 second, 2 seconds, 10 milliseconds, or may be longer or shorter, which will not be listed exhaustively herein.

That is, when the WUS is used to wake up the terminal device to monitor the PDCCH during DRX ON or not, the working period (i.e., the monitoring period of the WUS) of the first component (i.e., the WUR) of the terminal device may be the same as the period of the DRX. A position of a working time of the WUR (i.e., the starting position or the ending position of the monitoring duration within the monitoring period of the WUS) may have the known second relative time relationship with a position of a starting time of the DRX ON.

Based on the schemes provided in the aforementioned embodiments, the network device may configure the information related to the time-frequency resource of the WUS for the terminal device; and then the terminal device may determine the time-frequency resource of the WUS based on the information related to the time-frequency resource of the WUS, and monitor the WUS on the time-frequency resource of the WUS.

It needs to be noted that the information related to the time-frequency resource of the WUS may include at least one of the information related to the frequency domain resource of the WUS and the information related to the time domain resource of the WUS. In a case where only one of the information related to the frequency domain resource of the WUS and the information related to the time domain resource of the WUS is included, the information related to another resource may be defaulted or preset by the terminal device.

On the basis of the aforementioned embodiments, the first information also includes: signal-related information of the WUS;
the signal-related information of the WUS includes at least one of: information related to a target waveform of the WUS; and a target modulation manner used by the WUS.

The information related to the target waveform of the WUS includes: the target waveform of the WUS being obtained by modulating based on one of amplitude shift keying (ASK), frequency shift keying (FSK), and orthogonal frequency division multiplexing (OFDM).

That is to say, the target waveform used by the WUS may be a waveform of a signal modulated by any one of the ASK, FSK, and OFDM. The network device may pre-configure for the terminal device, the waveform used by the WUS to be obtained by modulating with any one of the above-mentioned ASK, FSK, and OFDM.

Similarly, the target modulation manner used by the WUS includes one of: binary phase shift keying (BPSK), quadrature phase shift keying (QPSK). That is to say, the network device may configure for the terminal device, the target modulation manner used for the WUS to be the BPSK or QPSK, etc.

As for the network device how to determine which waveform the terminal device uses for the WUS and/or which modulation manner the terminal device uses for the WUS, the network device may receive second information transmitted by the terminal device, where the second information includes capability information of the terminal device; the capability information of the terminal device includes at least one of: a waveform supported by the terminal device, and a modulation manner supported by the terminal device. The second information may be transmitted when the terminal device is in the RRC_CONNECTED state, and the second information may be carried by information such as an RRC signaling.

Herein, the waveform supported by the terminal device may specifically refer to: a waveform supported by the first component (i.e., the WUR) of the terminal device. That is, different terminal devices may have first components (i.e., WURs) with different capabilities, and the first components (i.e., the WURs) with different capabilities may support the reception of different waveforms. For example, first components (i.e., WURs) of some terminal devices may support the ASK, first components (i.e., WURs) of some terminal devices may support the FSK, first components (i.e., WURs) of some terminal devices may support the ASK and the FSK, first components (i.e., WURs) of some terminal devices may support the OFDM, and first components (i.e., WURs) of some terminal devices may support the ASK, the FSK and the OFDM. Therefore, the terminal device may report its own capability information including the waveform supported by the terminal device to the network device in advance, and the network device may configure different target waveforms of WUSs for different terminal devices based on the different capabilities reported by various terminal devices, that is, the network device may transmit WUSs with different waveforms for terminal devices with WURs of different capabilities.

Similarly, different terminal devices may have first components (i.e., WURs) with different capabilities, and the first components (i.e., the WURs) with different capabilities may support different modulation manners. For example, first components (i.e., WURs) of some terminal devices may support the QPSK, first components (i.e., WURs) of some terminal devices may support the BPSK, and first components (i.e., WURs) of some terminal devices may support the QPSK and the BPSK. Therefore, the terminal device may report its own capability information including the modulation manner supported by the terminal device to the network device in advance, and the network device may configure different target modulation manners for different terminal devices based on the different capabilities reported by various terminal devices, that is, the network device may transmit WUSs obtained in different modulation manners for terminal devices with first components (i.e., WURs) of different capabilities.

On the basis of the foregoing embodiment, the network device may further configure the first component of the terminal device to further perform measuring on a reference signal based on a configuration, which is described specifically as follows.

The method further includes: transmitting, by the network device, third information to the terminal device, where the third information includes measurement configuration information; where the measurement configuration information is used to configure a first component of the terminal device to perform measuring on a reference signal.

The measurement configuration information includes at least one of: configuration information of a reference signal of a serving cell; and configuration information of a reference signal of a neighboring cell.

The measurement configuration information includes the configuration information of the reference signal of the serving cell, that is, the measurement configuration information is used to configure a reference signal measured for the serving cell, and specifically may be to configure a time domain resource position and/or a frequency domain resource position of the reference signal measured for the serving cell, etc., the reference signal may be a CSI-RS, etc., which will not be exhaustively listed herein.

The measurement configuration information includes the configuration information of the reference signal of the neighboring cell, that is, the measurement configuration information is used to configure a reference signal measured for the neighboring cell (including an intra-frequency neighboring cell or an inter-frequency neighboring cell), and specifically may be to configure a time domain resource position and/or a frequency domain resource position of the reference signal measured for the neighboring cell, etc.

That is to say, the network device may further transmit the configuration of the measurement reference signal of the first component of the terminal device to the terminal device, so that the WUR of the terminal device performs an operation of measuring such as Radio Resource Management (RRM) and Radio Link Management (RLM).

It can be seen that by adopting the above solutions, the network device may transmit the WUS to the terminal device on the time-frequency resource of the WUS, and the information related to the time-frequency resource of the WUS is configured by the network device to the terminal device. By configuring the information related to the time-frequency resource of the WUS, the terminal device may perform the monitoring on the WUS in a specified time domain and/or frequency domain position, thereby achieving a more flexible configuration for the WUS while ensuring the energy saving of the terminal device.

Furthermore, the network device may also configure the position of the transmission bandwidth of the WUS, the size of the transmission bandwidth of the WUS, the signal waveform of the WUS, the modulation manner, the measurement configuration of the reference signal, etc., to the terminal device, so that the terminal device may use the WUR to receive the WUS and/or perform the measuring on the reference signal, thereby further ensuring that the configuration of the WUS is more flexible and is adaptable to more scenarios, while also ensuring the energy-saving effect of the terminal device.

FIG. 11 is a structural diagram of compoments of a terminal device 1100 according to an embodiment of the present application, including:
a first communication unit 1101, configured to monitor a wake-up signal (WUS) on a time-frequency resource of the WUS;
where information related to the time-frequency resource of the WUS is configured by a network device.

The first communication unit 1101 is configured to receive first information transmitted by the network device, where the first information includes the information related to the time-frequency resource of the WUS.

The information related to the time-frequency resource of the WUS includes at least one of:
information related to a frequency domain resource of the WUS; and
information related to a time domain resource of the WUS.

The information related to the frequency domain resource of the WUS includes at least one of: position indication information of a transmission bandwidth of the WUS; a size of the transmission bandwidth of the WUS; a subcarrier spacing of the WUS; and a length of a cyclic prefix (CP) of the WUS.

The position indication information of the transmission bandwidth of the WUS includes one of:
first position indication information, where the first position indication information is used to indicate a relative relationship between a position of the transmission bandwidth of the WUS and
a preset frequency domain range;
second position indication information, where the second position indication information is used to indicate a relative relationship between the position of the transmission bandwidth of the WUS and a first reference frequency point;
third position indication information, where the third position indication information is used to indicate a position of a first-type frequency point in the transmission bandwidth of the WUS.

The first position indication information includes one of:
the transmission bandwidth of the WUS being located within the preset frequency domain range, and the first-type frequency point in the transmission bandwidth of the WUS being located at a same position as a first-type frequency point in the preset frequency domain range;
the transmission bandwidth of the WUS being located within the preset frequency domain range, and there being a first frequency offset between the first-type frequency point in the transmission bandwidth of the WUS and a second reference frequency point in the preset frequency domain range;
the transmission bandwidth of the WUS being located outside the preset frequency domain range, and there being a second frequency offset between the first-type frequency point in the transmission bandwidth of the WUS and the second reference frequency point in the preset frequency domain range.

The second reference frequency point is one of:
a lowest frequency point of the preset frequency domain range; a highest frequency point of the preset frequency domain range; a central frequency point of the preset frequency domain range. The lowest frequency point of the preset frequency domain range is: the lowest frequency point of the preset frequency domain range is: a frequency point in a physical resource block (PRB) with a lowest frequency in the preset frequency domain range;
   and/or
the highest frequency point of the preset frequency domain range is: a frequency point in a PRB with a highest frequency in the preset frequency domain range.

The preset frequency domain range is configured by a network device.

The preset frequency domain range includes: an initial downlink bandwidth part (BWP).

The second position indication information includes:
a third frequency offset between the first-type frequency point in the transmission bandwidth of the WUS and the first reference frequency point.

The first reference frequency point is one of:
a point A, a frequency starting point position of a cell carrier, a frequency point in a frequency domain range of a cell defining synchronization signal and physical broadcast channel block (CD-SSB).

A frequency domain position of the point A is configured by a network device, and/or the frequency starting point position of the cell carrier is configured by a network device.

The first-type frequency point is one of: a lowest frequency point, a central frequency point, a highest frequency point.

The size of the transmission bandwidth of the WUS is expressed in one of frequency domain units of: Khz, Mhz, physical resource block (PRB), and a number of subcarriers.

The information related to the time domain resource of the WUS includes at least one of:
a monitoring period of the WUS; and a monitoring duration within the monitoring period of the WUS.

The WUS is used to wake up the terminal device to monitor a paging message;
the monitoring period of the WUS is the same as a period of the paging message;
there is a first relative time relationship between a position of the monitoring duration within the monitoring period of the WUS and a position of a paging occasion (PO) for monitoring the paging message.

The WUS is used to wake up the terminal device to monitor a physical downlink control channel (PDCCH) in a discontinuous reception (DRX) ON duration;
the monitoring period of the WUS is the same as a period of DRX;
there is a second relative time relationship between a position of the monitoring duration within the monitoring period of the WUS and a starting time position of DRX monitoring.

The first information further includes: signal-related information of the WUS; the signal-related information of the WUS includes at least one of: information related to a target waveform of the WUS; and a target modulation manner used by the WUS.

The information related to the target waveform of the WUS includes: the target waveform of the WUS being obtained by modulating based on one of amplitude shift keying (ASK), frequency shift keying (FSK), and orthogonal frequency division multiplexing (OFDM).

The target modulation manner used by the WUS includes one of: binary phase shift keying (BPSK), quadrature phase shift keying (QPSK).

The first communication unit 1101 is configured to transmit second information, where the second information includes capability information of the terminal device; the capability information of the terminal device includes at least one of: a waveform supported by the terminal device, and a modulation manner supported by the terminal device.

The first communication unit 1101 is configured to receive third information, where the third information includes measurement configuration information;
where the measurement configuration information is used to configure a first component of the terminal device to perform measuring on a reference signal; the terminal device includes the first component and a second component, power consumption of the first component is lower than power consumption of the second component.

On the basis of FIG. 11, as shown in FIG. 12, the terminal device further includes:
a first processing unit 1102, configured to control the first component to perform the measuring on the reference signal based on the measurement configuration information; the reference signal includes: a reference signal of a serving cell and/or a reference signal of a neighboring cell.

The measurement configuration information includes at least one of: configuration information of a reference signal of a serving cell; and configuration information of a reference signal of a neighboring cell.

The terminal device in the embodiments of the present application can implement the corresponding functions of the terminal device in the aforementioned method embodiments. The processes, functions, implementations and beneficial effects corresponding to various modules (sub-modules, units or components, etc.) in the terminal device may refer to in the corresponding description in the above method embodiments, which will not be repeated herein. It needs to be noted that the functions described for various modules (sub-modules, units or components, etc.) in the terminal device of the embodiments of the application may be implemented by different modules (sub-modules, units or components, etc., or may also be implemented by a same module (sub-module, unit or component, etc.).

By adopting the above solutions, the terminal device may monitor the WUS on the time-frequency resource of the WUS, and the information related to the time-frequency resource of the WUS is configured by the network device. By configuring the information related to the time-frequency resource of the WUS, so that the terminal device may perform monitoring on the WUS in a specified time domain and/or frequency domain position, thereby achieving a more flexible configuration for the WUS while ensuring the energy saving of the terminal device.

FIG. 13 is a structural diagram of components of a network device 1300 according to an embodiment of the present application, including:
a second communication unit 1301, configured to transmit a wake-up signal (WUS) to a terminal device on a time-frequency resource of the WUS;
where information related to the time-frequency resource of the WUS is configured by the network device to the terminal device.

The second communication unit 1301 is configured to transmit first information to the terminal device, and the first information includes the information related to the time-frequency resource of the WUS.

The information related to the time-frequency resource of the WUS includes at least one of:
information related to a frequency domain resource of the WUS; and
information related to a time domain resource of the WUS.

The information related to the frequency domain resource of the WUS includes at least one of: position indication information of a transmission bandwidth of the WUS; a size of the transmission bandwidth of the WUS; a subcarrier spacing of the WUS; and a length of a cyclic prefix (CP) of the WUS.

The position indication information of the transmission bandwidth of the WUS includes one of:
first position indication information, where the first position indication information is used to indicate a relative relationship between a position of the transmission bandwidth of the WUS and a preset frequency domain range;
second position indication information, where the second position indication information is used to indicate a relative relationship between the position of the transmission bandwidth of the WUS and a first reference frequency point;
third position indication information, where the third position indication information is used to indicate a position of a first-type frequency point in the transmission bandwidth of the WUS.

The first position indication information includes one of:
the transmission bandwidth of the WUS being located within the preset frequency domain range,
and the first-type frequency point in the transmission bandwidth of the WUS being located at a same position as a first-type frequency point in the preset frequency domain range;
the transmission bandwidth of the WUS being located within the preset frequency domain range, and there being a first frequency offset between the first-type frequency point in the transmission bandwidth of the WUS and a second reference frequency point in the preset frequency domain range;
the transmission bandwidth of the WUS being located outside the preset frequency domain range, and there being a second frequency offset between the first-type frequency point in the transmission bandwidth of the WUS and the second reference frequency point in the preset frequency domain range.

The second reference frequency point is one of: a lowest frequency point of the preset frequency domain range; a highest frequency point of the preset frequency domain range; a central frequency point of the preset frequency domain range.

The lowest frequency point of the preset frequency domain range is: a frequency point in a physical resource block (PRB) with a lowest frequency in the preset frequency domain range;
and/or
the highest frequency point of the preset frequency domain range is: a frequency point in a PRB with a highest frequency in the preset frequency domain range.

The second communication unit 1301 is configured to configure the preset frequency domain range to the terminal device.

The preset frequency domain range includes: an initial downlink bandwidth part (BWP).

The second position indication information includes: a third frequency offset between the first-type frequency point in the transmission bandwidth of the WUS and the first reference frequency point.

The first reference frequency point is one of: a point A, a frequency starting point position of a cell carrier, a frequency point in a frequency domain range of a cell defining synchronization signal and physical broadcast channel block (CD-SSB).

The second communication unit is configured to configure to the terminal device, a frequency domain position of the point A and/or the frequency starting point position of the cell carrier.

The first-type frequency point is one of: a lowest frequency point, a central frequency point, a highest frequency point.

The size of the transmission bandwidth of the WUS is expressed in one of frequency domain units of: Khz, Mhz, PRB, and a number of subcarriers.

The information related to the time domain resource of the WUS includes at least one of:
a monitoring period of the WUS; and a monitoring duration within the monitoring period of the WUS.

The WUS is used to wake up the terminal device to monitor a paging message;
the monitoring period of the WUS is the same as a period of the paging message;
there is a first relative time relationship between a position of the monitoring duration within the monitoring period of the WUS and a position of a paging occasion (PO) for monitoring the paging message.

The WUS is used to wake up the terminal device to monitor a physical downlink control channel (PDCCH) in a discontinuous reception (DRX) ON duration;
the monitoring period of the WUS is the same as a period of DRX;
there is a second relative time relationship between a position of the monitoring duration within the monitoring period of the WUS and a starting time position of DRX monitoring.

The first information further includes: signal-related information of the WUS;
the signal-related information of the WUS includes at least one of: information related to a target waveform of the WUS; and a target modulation manner used by the WUS.

The information related to the target waveform of the WUS includes: the target waveform of the WUS being obtained by modulating based on one of amplitude shift keying (ASK), frequency shift keying (FSK), and orthogonal frequency division multiplexing (OFDM).

The target modulation manner used by the WUS includes one of: binary phase shift keying (BPSK), quadrature phase shift keying (QPSK).

The second communication unit is configured to receive second information transmitted by the terminal device, where the second information includes capability information of the terminal device; the capability information of the terminal device includes at least one of: a waveform supported by the terminal device, and a modulation manner supported by the terminal device.

The second communication unit 1301 is configured to transmit third information to the terminal device, where the third information includes measurement configuration information;
where the measurement configuration information is used to configure a first component of the terminal device to perform measuring on a reference signal.

The measurement configuration information includes at least one of:
configuration information of a reference signal of a serving cell; and
configuration information of a reference signal of a neighboring cell.

It should also be understood that the network device may also include a second processing unit, the second processing unit may be configured to perform related processes in the method embodiments, such as related processes for the first information, the second information, and the third information, and a related process of generating the WUS, etc., which will not be listed exhaustively.

The network device in the embodiments of the present application can implement the corresponding functions of the network device in the aforementioned method embodiments. The processes, functions, implementations and beneficial effects corresponding to various modules (sub-modules, units or components, etc.) in the network device may refer to in the corresponding description in the above method embodiments, which will not be repeated herein. It needs to be noted that the functions described for various modules (sub-modules, units or components, etc.) in the network device of the embodiments of the application may be implemented by different modules (sub-modules, units or components, etc., or may also be implemented by a same module (sub-module, unit or component, etc.).

By adopting the above solutions, the network device may transmit the WUS to the terminal device on the time-frequency resource of the WUS, and the information related to the time-frequency resource of the WUS is configured by the network device to the terminal device. By configuring the information related to the time-frequency resource of the WUS, so that the terminal device may perform monitoring on the WUS in a specified time domain and/or frequency domain position, thereby achieving a more flexible configuration for the WUS while ensuring the energy saving of the terminal device.

FIG. 14 is a schematic structural diagram of a communication device 1400 according to the embodiments of the present application. The communication device 1400 includes a processor 1410, and the processor 1410 may invoke and execute a computer program from a memory to cause the communication device 1400 to implement the method in the embodiments of the present application.

In a possible implementation, the communication device 1400 may further include a memory 1420. Herein, the processor 1410 may invoke and execute a computer program from the memory 1420 to cause the communication device 1400 to implement the method in the embodiments of the present application.

Herein, the memory 1420 may be a separate device independent from the processor 1410, or may also be integrated into the processor 1410.

In a possible implementation, the communication device 1400 may further include a transceiver 1430, and the processor 1410 may control the transceiver 1430 to communicate with other devices, and specifically, to be capable of transmitting information or data to other devices, or receive information or data transmitted by other devices.

Herein, the transceiver 1430 may include a transmitter and a receiver. The transceiver 1430 may further include an antenna, and a number of antennas may be one or more.

In a possible implementation, the communication device 1400 may be the network device in the embodiments of the present disclosure, and the communication device 1400 may implement the corresponding processes implemented by the network device in respective methods of the embodiments of the present disclosure, which will not be repeated here for the sake of brevity.

In a possible implementation, the communication device 1400 may be the terminal device in the embodiments of the present disclosure, and the communication device 1400 may implement the corresponding processes implemented by the terminal device in respective methods of the embodiments of the present disclosure, which will not be repeated here for the sake of brevity.

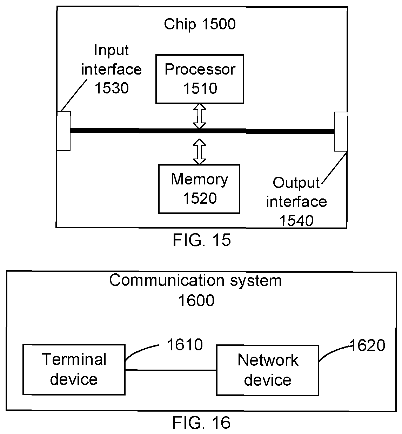

FIG. 15 is a schematic structural diagram of a chip 1500 according to the embodiments of the present disclosure. The chip 1500 includes a processor 1510, and the processor 1510 may invoke and execute a computer program from a memory to implement the method in the embodiments of the present disclosure.

In a possible implementation, the chip 1500 may further include a memory 1520. Herein, the processor 1510 may invoke and execute the computer program from the memory 1520 to implement the method performed by the terminal device or the network device in the embodiments of the present disclosure.

Herein, the memory 1520 may be a separate device independent from the processor 1510, or may also be integrated into the processor 1510.

In a possible implementation, the chip 1500 may further include an input interface 1530. Herein, the processor 1510 may control the input interface 1530 to communicate with other devices or chips, and specifically, to be capable of acquiring information or data transmitted by other devices or chips.

In a possible implementation, the chip 1500 may further include an output interface 1540. Herein, the processor 1510 may control the output interface 1540 to communicate with other devices or chips, and specifically, to be capable of outputting information or data to other devices or chips.

In a possible implementation, the chip may be applied to the network device in the embodiments of the present disclosure, and the chip may implement the corresponding processes implemented by a network device in the respective methods of the embodiments of the present disclosure, which will not be repeated here for the sake of brevity.

In a possible implementation, the chip may be applied to the terminal device in the embodiments of the present disclosure, and the chip may implement the corresponding processes implemented by a terminal device in the respective methods of the embodiments of the present disclosure, which will not be repeated here for the sake of brevity.

The chips applied to the network device and the terminal device may be the same chip or different chips.

It should be understood that the chip mentioned in the embodiments of the present disclosure may also be referred to as a system on chip, a system chip, a chip system or a system-on-chip chip, etc.

The processor mentioned above may be a general-purpose processor, a digital signal processor (DSP), a field programmable gate array (FPGA), an application specific integrated circuit (ASIC) or other programmable logic devices, a transistor logic device, a discrete hardware component, etc. Herein, the general-purpose processor mentioned above may be a microprocessor or may also be any conventional processor.

The memory mentioned above may be a volatile memory or a non-volatile memory, or may include both volatile and non-volatile memories. Herein, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM).

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

FIG. 16 is a schematic block diagram of a communication system 1600 according to the embodiments of the present application. The communication system 1600 includes a terminal device 1610 and a network device 1620.

Herein, the terminal device 1610 may be configured to implement the corresponding functions implemented by the terminal device in the above method, and the network device 1620 may be configured to implement the corresponding functions implemented by the network device in the above method. For the sake of brevity, it will not repeated here.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When computer program instructions are loaded and executed on a computer, processes or functions according to the embodiments of the present disclosure are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line (DSL)) or wireless (such as infrared, radio, microwave, etc.) means. The computer-readable storage medium may be any available medium that can be accessed by the computer, or a data storage device, such as including a server or a data center that integrates one or more available mediums. The available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

It should be understood that, in the various embodiments of the present disclosure, a size of serial numbers of the above processes does not imply an order of execution, and the execution order of the respective processes should be determined by their function and internal logic, but should not constitute any limitation on the implementation processes of the embodiments of the present disclosure.

Those skilled in the art may clearly understand that, for the convenience and brevity of the description, the specific working processes of the systems, apparatus and units described above may refer to the corresponding processes in the above method embodiments, which will not be repeated here.

The above description is only the specific implementation of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of claims.

## Claims

1. An information transmission method, comprising:
monitoring, by a terminal device, a wake-up signal (WUS) on a time-frequency resource of the WUS;
wherein information related to the time-frequency resource of the WUS is configured by a network device.

2. The method according to claim 1, wherein the method further comprises:
receiving, by the terminal device, first information transmitted by the network device, wherein the first information comprises the information related to the time-frequency resource of the WUS.

3. The method according to claim 1 or 2, wherein the information related to the time-frequency resource of the WUS comprises at least one of:
information related to a frequency domain resource of the WUS; and
information related to a time domain resource of the WUS.

4. The method according to claim 3, wherein the information related to the frequency domain resource of the WUS comprises at least one:
position indication information of a transmission bandwidth of the WUS;
a size of the transmission bandwidth of the WUS;
a subcarrier spacing of the WUS;
a length of a cyclic prefix (CP) of the WUS.

5. The method according to claim 4, wherein the position indication information of the transmission bandwidth of the WUS comprises one of:
first position indication information, wherein the first position indication information is used to indicate a relative relationship between a position of the transmission bandwidth of the WUS and a preset frequency domain range;
second position indication information, wherein the second position indication information is used to indicate a relative relationship between the position of the transmission bandwidth of the WUS and a first reference frequency point;
third position indication information, wherein the third position indication information is used to indicate a position of a first-type frequency point in the transmission bandwidth of the WUS.

6. The method according to claim 5, wherein the first position indication information comprises one of:
the transmission bandwidth of the WUS being located within the preset frequency domain range, and the first-type frequency point in the transmission bandwidth of the WUS being located at a same position as a first-type frequency point in the preset frequency domain range;
the transmission bandwidth of the WUS being located within the preset frequency domain range, and there being a first frequency offset between the first-type frequency point in the transmission bandwidth of the WUS and a second reference frequency point in the preset frequency domain range;
the transmission bandwidth of the WUS being located outside the preset frequency domain range, and there being a second frequency offset between the first-type frequency point in the transmission bandwidth of the WUS and the second reference frequency point in the preset frequency domain range.

7. The method according to claim 6, wherein the second reference frequency point is one of:
a lowest frequency point of the preset frequency domain range;
a highest frequency point of the preset frequency domain range;
a central frequency point of the preset frequency domain range.

8. The method according to claim 7, wherein
the lowest frequency point of the preset frequency domain range is: a frequency point in a physical resource block (PRB) with a lowest frequency in the preset frequency domain range;
and/or
the highest frequency point of the preset frequency domain range is: a frequency point in a PRB with a highest frequency in the preset frequency domain range.

9. The method according to any one of claims 5 to 8, wherein the preset frequency domain range is configured by a network device.

10. The method according to any one of claims 5 to 9, wherein the preset frequency domain range comprises: an initial downlink bandwidth part (BWP).

11. The method according to claim 5, wherein the second position indication information comprises:
a third frequency offset between the first-type frequency point in the transmission bandwidth of the WUS and the first reference frequency point.

12. The method according to claim 5 or 11, wherein the first reference frequency point is one of:
a point A, a frequency starting point position of a cell carrier, a frequency point in a frequency domain range of a cell defining synchronization signal and physical broadcast channel block (CD-SSB).

13. The method according to claim 12, wherein a frequency domain position of the point A is configured by a network device, and/or the frequency starting point position of the cell carrier is configured by a network device.

14. The method according to claim 6 or 11, wherein the first-type frequency point is one of: a lowest frequency point, a central frequency point, a highest frequency point.

15. The method according to any one of claims 3 to 14, wherein the size of the transmission bandwidth of the WUS is expressed in one of frequency domain units of: Khz, Mhz, physical resource block (PRB), and a number of subcarriers.

16. The method according to any one of claims 3 to 15, wherein the information related to the time domain resource of the WUS comprises at least one of:
a monitoring period of the WUS; and a monitoring duration within the monitoring period of the WUS.

17. The method according to claim 16, wherein the WUS is used to wake up the terminal device to monitor a paging message;
the monitoring period of the WUS is the same as a period of the paging message;
there is a first relative time relationship between a position of the monitoring duration within the monitoring period of the WUS and a position of a paging occasion (PO) for monitoring the paging message.

18. The method according to claim 16, wherein the WUS is used to wake up the terminal device to monitor a physical downlink control channel (PDCCH) in a discontinuous reception (DRX) ON duration;
the monitoring period of the WUS is the same as a period of DRX;
there is a second relative time relationship between a position of the monitoring duration within the monitoring period of the WUS and a starting time position of DRX monitoring.

19. The method according to any one of claims 2 to 18, wherein the first information further comprises: signal-related information of the WUS;
the signal-related information of the WUS comprises at least one of:
information related to a target waveform of the WUS; and
a target modulation manner used by the WUS.

20. The method according to claim 19, wherein the information related to the target waveform of the WUS comprises: the target waveform of the WUS being obtained by modulating based on one of amplitude shift keying (ASK), frequency shift keying (FSK), and orthogonal frequency division multiplexing (OFDM).

21. The method according to claim 19 or 20, wherein the target modulation manner used by the WUS comprises one of: binary phase shift keying (BPSK), quadrature phase shift keying (QPSK).

22. The method according to any one of claims 19 to 21, wherein the method further comprises:
transmitting, by the terminal device, second information, wherein the second information comprises capability information of the terminal device; the capability information of the terminal device comprises at least one of: a waveform supported by the terminal device, and a modulation manner supported by the terminal device.

23. The method according to any one of claims 1 to 22, wherein the method further comprises:
receiving, by the terminal device, third information, wherein the third information comprises measurement configuration information;
wherein the measurement configuration information is used to configure a first component of the terminal device to perform measuring on a reference signal; the terminal device comprises the first component and a second component, power consumption of the first component is lower than power consumption of the second component.

24. The method according to claim 23, wherein the method further comprises:
performing, by the first component of the terminal device, the measuring on the reference signal based on the measurement configuration information; wherein the reference signal comprises: a reference signal of a serving cell and/or a reference signal of a neighboring cell.

25. The method according to claim 23 or 24, wherein the measurement configuration information comprises at least one of:
configuration information of a reference signal of a serving cell; and
configuration information of a reference signal of a neighboring cell.

26. An information transmission method, comprising:
transmitting, by a network device, a wake-up signal (WUS) to a terminal device on a time-frequency resource of the WUS;
wherein information related to the time-frequency resource of the WUS is configured by the network device to the terminal device.

27. The method according to claim 26, wherein the method further comprises:
transmitting, by the network device, first information to the terminal device, wherein the first information comprises the information related to the time-frequency resource of the WUS.

28. The method according to claim 26 or 27, wherein the information related to the time-frequency resource of the WUS comprises at least one of:
information related to a frequency domain resource of the WUS; and
information related to a time domain resource of the WUS.

29. The method according to claim 28, wherein the information related to the frequency domain resource of the WUS comprises at least one:
position indication information of a transmission bandwidth of the WUS;
a size of the transmission bandwidth of the WUS;
a subcarrier spacing of the WUS;
a length of a cyclic prefix (CP) of the WUS.

30. The method according to claim 29, wherein the position indication information of the transmission bandwidth of the WUS comprises one of:
first position indication information, wherein the first position indication information is used to indicate a relative relationship between a position of the transmission bandwidth of the WUS and a preset frequency domain range;
second position indication information, wherein the second position indication information is used to indicate a relative relationship between the position of the transmission bandwidth of the WUS and a first reference frequency point;
third position indication information, wherein the third position indication information is used to indicate a position of a first-type frequency point in the transmission bandwidth of the WUS.

31. The method according to claim 30, wherein the first position indication information comprises one of:
the transmission bandwidth of the WUS being located within the preset frequency domain range, and the first-type frequency point in the transmission bandwidth of the WUS being located at a same position as a first-type frequency point in the preset frequency domain range;
the transmission bandwidth of the WUS being located within the preset frequency domain range, and there being a first frequency offset between the first-type frequency point in the transmission bandwidth of the WUS and a second reference frequency point in the preset frequency domain range;
the transmission bandwidth of the WUS being located outside the preset frequency domain range, and there being a second frequency offset between the first-type frequency point in the transmission bandwidth of the WUS and the second reference frequency point in the preset frequency domain range.

32. The method according to claim 31, wherein the second reference frequency point is one of:
a lowest frequency point of the preset frequency domain range;
a highest frequency point of the preset frequency domain range;
a central frequency point of the preset frequency domain range.

33. The method according to claim 32, wherein the lowest frequency point of the preset frequency domain range is: a frequency point in a physical resource block (PRB) with a lowest frequency in the preset frequency domain range;
and/or
the highest frequency point of the preset frequency domain range is: a frequency point in a PRB with a highest frequency in the preset frequency domain range.

34. The method according to any one of claims 30 to 33, wherein the method further comprises:
configuring, by the network device, the preset frequency domain range to the terminal device.

35. The method according to any one of claims 30 to 34, wherein the preset frequency domain range comprises: an initial downlink bandwidth part (BWP).

36. The method according to claim 30, wherein the second position indication information comprises:
a third frequency offset between the first-type frequency point in the transmission bandwidth of the WUS and the first reference frequency point.

37. The method according to claim 30 or 36, wherein the first reference frequency point is one of:
a point A, a frequency starting point position of a cell carrier, a frequency point in a frequency domain range of a cell defining synchronization signal and physical broadcast channel block (CD-SSB).

38. The method according to claim 37, wherein the method further comprises:
configuring, by the network device to the terminal device, a frequency domain position of the point A and/or the frequency starting point position of the cell carrier.

39. The method according to claim 31 or 36, wherein the first-type frequency point is one of: a lowest frequency point, a central frequency point, a highest frequency point.

40. The method according to any one of claims 29 to 39, wherein the size of the transmission bandwidth of the WUS is expressed in one of frequency domain units of: Khz, Mhz, PRB, and a number of subcarriers.

41. The method according to any one of claims 29 to 40, wherein the information related to the time domain resource of the WUS comprises at least one of:
a monitoring period of the WUS; and a monitoring duration within the monitoring period of the WUS.

42. The method according to claim 41, wherein the WUS is used to wake up the terminal device to monitor a paging message;
the monitoring period of the WUS is the same as a period of the paging message;
there is a first relative time relationship between a position of the monitoring duration within the monitoring period of the WUS and a position of a paging occasion (PO) for monitoring the paging message.

43. The method according to claim 41, wherein the WUS is used to wake up the terminal device to monitor a physical downlink control channel (PDCCH) in a discontinuous reception (DRX) ON duration;
the monitoring period of the WUS is the same as a period of DRX;
there is a second relative time relationship between a position of the monitoring duration within the monitoring period of the WUS and a starting time position of DRX monitoring.

44. The method according to any one of claims 27 to 43, wherein the first information further comprises: signal-related information of the WUS;
the signal-related information of the WUS comprises at least one of:
information related to a target waveform of the WUS; and
a target modulation manner used by the WUS.

45. The method according to claim 44, wherein the information related to the target waveform of the WUS comprises: the target waveform of the WUS being obtained by modulating based on one of amplitude shift keying (ASK), frequency shift keying (FSK), and orthogonal frequency division multiplexing (OFDM).

46. The method according to claim 44 or 45, wherein the target modulation manner used by the WUS comprises one of: binary phase shift keying (BPSK), quadrature phase shift keying (QPSK).

47. The method according to any one of claims 44 to 46, wherein the method further comprises:
receiving, by the network device, second information transmitted by the terminal device, wherein the second information comprises capability information of the terminal device; the capability information of the terminal device comprises at least one of: a waveform supported by the terminal device, and a modulation manner supported by the terminal device.

48. The method according to any one of claims 26 to 47, wherein the method further comprises:
transmitting, by the network device, third information to the terminal device, wherein the third information comprises measurement configuration information;
wherein the measurement configuration information is used to configure a first component of the terminal device to perform measuring on a reference signal.

49. The method according to claim 48, wherein the measurement configuration information comprises at least one of:
configuration information of a reference signal of a serving cell; and
configuration information of a reference signal of a neighboring cell.

50. A terminal device, comprising:
a first communication unit, configured to monitor a wake-up signal (WUS) on a time-frequency resource of the WUS;
wherein information related to the time-frequency resource of the WUS is configured by a network device.

51. The terminal device according to claim 50, wherein the first communication unit is configured to receive first information transmitted by the network device, wherein the first information comprises the information related to the time-frequency resource of the WUS.

52. The terminal device according to claim 50 or 51, wherein the information related to the time-frequency resource of the WUS comprises at least one of:
information related to a frequency domain resource of the WUS; and
information related to a time domain resource of the WUS.

53. The terminal device according to claim 52, wherein the information related to the frequency domain resource of the WUS comprises at least one:
position indication information of a transmission bandwidth of the WUS;
a size of the transmission bandwidth of the WUS;
a subcarrier spacing of the WUS;
a length of a cyclic prefix (CP) of the WUS.

54. The terminal device according to claim 53, wherein the position indication information of the transmission bandwidth of the WUS comprises one of:
first position indication information, wherein the first position indication information is used to indicate a relative relationship between a position of the transmission bandwidth of the WUS and a preset frequency domain range;
second position indication information, wherein the second position indication information is used to indicate a relative relationship between the position of the transmission bandwidth of the WUS and a first reference frequency point;
third position indication information, wherein the third position indication information is used to indicate a position of a first-type frequency point in the transmission bandwidth of the WUS.

55. The terminal device according to claim 54, wherein the first position indication information comprises one of:
the transmission bandwidth of the WUS being located within the preset frequency domain range, and the first-type frequency point in the transmission bandwidth of the WUS being located at a same position as a first-type frequency point in the preset frequency domain range;
the transmission bandwidth of the WUS being located within the preset frequency domain range, and there being a first frequency offset between the first-type frequency point in the transmission bandwidth of the WUS and a second reference frequency point in the preset frequency domain range;
the transmission bandwidth of the WUS being located outside the preset frequency domain range, and there being a second frequency offset between the first-type frequency point in the transmission bandwidth of the WUS and the second reference frequency point in the preset frequency domain range.

56. The terminal device according to claim 55, wherein the second reference frequency point is one of:
a lowest frequency point of the preset frequency domain range;
a highest frequency point of the preset frequency domain range;
a central frequency point of the preset frequency domain range.

57. The terminal device according to claim 56, wherein
the lowest frequency point of the preset frequency domain range is: a frequency point in a physical resource block (PRB) with a lowest frequency in the preset frequency domain range;
and/or
the highest frequency point of the preset frequency domain range is: a frequency point in a PRB with a highest frequency in the preset frequency domain range.

58. The terminal device according to any one of claims 54 to 57, wherein the preset frequency domain range is configured by a network device.

59. The terminal device according to any one of claims 54 to 58, wherein the preset frequency domain range comprises: an initial downlink bandwidth part (BWP).

60. The terminal device according to claim 54, wherein the second position indication information comprises:
a third frequency offset between the first-type frequency point in the transmission bandwidth of the WUS and the first reference frequency point.

61. The terminal device according to claim 54 or 60, wherein the first reference frequency point is one of:
a point A, a frequency starting point position of a cell carrier, a frequency point in a frequency domain range of a cell defining synchronization signal and physical broadcast channel block (CD-SSB).

62. The terminal device according to claim 61, wherein a frequency domain position of the point A is configured by a network device, and/or the frequency starting point position of the cell carrier is configured by a network device.

63. The terminal device according to claim 55 or 60, wherein the first-type frequency point is one of: a lowest frequency point, a central frequency point, a highest frequency point.

64. The terminal device according to any one of claims 52 to 63, wherein the size of the transmission bandwidth of the WUS is expressed in one of frequency domain units of: Khz, Mhz, physical resource block (PRB), and a number of subcarriers.

65. The terminal device according to any one of claims 52 to 64, wherein the information related to the time domain resource of the WUS comprises at least one of:
a monitoring period of the WUS; and a monitoring duration within the monitoring period of the WUS.

66. The terminal device according to claim 65, wherein the WUS is used to wake up the terminal device to monitor a paging message;
the monitoring period of the WUS is the same as a period of the paging message;
there is a first relative time relationship between a position of the monitoring duration within the monitoring period of the WUS and a position of a paging occasion (PO) for monitoring the paging message.

67. The terminal device according to claim 65, wherein the WUS is used to wake up the terminal device to monitor a physical downlink control channel (PDCCH) in a discontinuous reception (DRX) ON duration;
the monitoring period of the WUS is the same as a period of DRX;
there is a second relative time relationship between a position of the monitoring duration within the monitoring period of the WUS and a starting time position of DRX monitoring.

68. The terminal device according to any one of claims 51 to 67, wherein the first information further comprises: signal-related information of the WUS;
the signal-related information of the WUS comprises at least one of:
information related to a target waveform of the WUS; and
a target modulation manner used by the WUS.

69. The terminal device according to claim 68, wherein the information related to the target waveform of the WUS comprises: the target waveform of the WUS being obtained by modulating based on one of amplitude shift keying (ASK), frequency shift keying (FSK), and orthogonal frequency division multiplexing (OFDM).

70. The terminal device according to claim 68 or 69, wherein the target modulation manner used by the WUS comprises one of: binary phase shift keying (BPSK), quadrature phase shift keying (QPSK).

71. The terminal device according to any one of claims 68 to 70, wherein the first communication unit is configured to transmit second information, wherein the second information comprises capability information of the terminal device; the capability information of the terminal device comprises at least one of: a waveform supported by the terminal device, and a modulation manner supported by the terminal device.

72. The terminal device according to any one of claims 50 to 71, wherein the first communication unit is configured to receive third information, wherein the third information comprises measurement configuration information;
wherein the measurement configuration information is used to configure a first component of the terminal device to perform measuring on a reference signal; the terminal device comprises the first component and a second component, power consumption of the first component is lower than power consumption of the second component.

73. The terminal device according to claim 72, wherein the terminal device further comprises:
a first processing unit, configured to control the first component to perform the measuring on the reference signal based on the measurement configuration information; the reference signal comprises: a reference signal of a serving cell and/or a reference signal of a neighboring cell.

74. The terminal device according to claim 72 or 73, wherein the measurement configuration information comprises at least one of:
configuration information of a reference signal of a serving cell; and
configuration information of a reference signal of a neighboring cell.

75. A network device, comprising:
a second communication unit, configured to transmit a wake-up signal (WUS) to a terminal device on a time-frequency resource of the WUS;
wherein information related to the time-frequency resource of the WUS is configured by the network device to the terminal device.

76. The network device according to claim 75, wherein the second communication unit is configured to transmit first information to the terminal device, and the first information comprises the information related to the time-frequency resource of the WUS.

77. The network device according to claim 75 or 76, wherein the information related to the time-frequency resource of the WUS comprises at least one of:
information related to a frequency domain resource of the WUS; and
information related to a time domain resource of the WUS.

78. The network device according to claim 77, wherein the information related to the frequency domain resource of the WUS comprises at least one:
position indication information of a transmission bandwidth of the WUS;
a size of the transmission bandwidth of the WUS;
a subcarrier spacing of the WUS;
a length of a cyclic prefix (CP) of the WUS.

79. The network device according to claim 78, wherein the position indication information of the transmission bandwidth of the WUS comprises one of:
first position indication information, wherein the first position indication information is used to indicate a relative relationship between a position of the transmission bandwidth of the WUS and a preset frequency domain range;
second position indication information, wherein the second position indication information is used to indicate a relative relationship between the position of the transmission bandwidth of the WUS and a first reference frequency point;
third position indication information, wherein the third position indication information is used to indicate a position of a first-type frequency point in the transmission bandwidth of the WUS.

80. The network device according to claim 79, wherein the first position indication information comprises one of:
the transmission bandwidth of the WUS being located within the preset frequency domain range, and the first-type frequency point in the transmission bandwidth of the WUS being located at a same position as a first-type frequency point in the preset frequency domain range;
the transmission bandwidth of the WUS being located within the preset frequency domain range, and there being a first frequency offset between the first-type frequency point in the transmission bandwidth of the WUS and a second reference frequency point in the preset frequency domain range;
the transmission bandwidth of the WUS being located outside the preset frequency domain range, and there being a second frequency offset between the first-type frequency point in the transmission bandwidth of the WUS and the second reference frequency point in the preset frequency domain range.

81. The network device according to claim 80, wherein the second reference frequency point is one of:
a lowest frequency point of the preset frequency domain range;
a highest frequency point of the preset frequency domain range;
a central frequency point of the preset frequency domain range.

82. The network device according to claim 81, wherein the lowest frequency point of the preset frequency domain range is: a frequency point in a physical resource block (PRB) with a lowest frequency in the preset frequency domain range;
and/or
the highest frequency point of the preset frequency domain range is: a frequency point in a PRB with a highest frequency in the preset frequency domain range.

83. The network device according to any one of claims 79 to 82, wherein the second communication unit is configured to configure the preset frequency domain range to the terminal device.

84. The network device according to any one of claims 79 to 83, wherein the preset frequency domain range comprises: an initial downlink bandwidth part (BWP).

85. The network device according to claim 79, wherein the second position indication information comprises:
a third frequency offset between the first-type frequency point in the transmission bandwidth of the WUS and the first reference frequency point.

86. The network device according to claim 79 or 85, wherein the first reference frequency point is one of:
a point A, a frequency starting point position of a cell carrier, a frequency point in a frequency domain range of a cell defining synchronization signal and physical broadcast channel block (CD-SSB).

87. The network device according to claim 86, wherein the second communication unit is configured to configure to the terminal device, a frequency domain position of the point A and/or the frequency starting point position of the cell carrier.

88. The network device according to claim 80 or 85, wherein the first-type frequency point is one of: a lowest frequency point, a central frequency point, a highest frequency point.

89. The network device according to any one of claims 78 to 88, wherein the size of the transmission bandwidth of the WUS is expressed in one of frequency domain units of: Khz, Mhz, PRB, and a number of subcarriers.

90. The network device according to any one of claims 78 to 89, wherein the information related to the time domain resource of the WUS comprises at least one of:
a monitoring period of the WUS; and a monitoring duration within the monitoring period of the WUS.

91. The network device according to claim 90, wherein the WUS is used to wake up the terminal device to monitor a paging message;
the monitoring period of the WUS is the same as a period of the paging message;
there is a first relative time relationship between a position of the monitoring duration within the monitoring period of the WUS and a position of a paging occasion (PO) for monitoring the paging message.

92. The network device according to claim 90, wherein the WUS is used to wake up the terminal device to monitor a physical downlink control channel (PDCCH) in a discontinuous reception (DRX) ON duration;
the monitoring period of the WUS is the same as a period of DRX;
there is a second relative time relationship between a position of the monitoring duration within the monitoring period of the WUS and a starting time position of DRX monitoring.

93. The network device according to any one of claims 76 to 92, wherein the first information further comprises: signal-related information of the WUS;
the signal-related information of the WUS comprises at least one of:
information related to a target waveform of the WUS; and
a target modulation manner used by the WUS.

94. The network device according to claim 93, wherein the information related to the target waveform of the WUS comprises: the target waveform of the WUS being obtained by modulating based on one of amplitude shift keying (ASK), frequency shift keying (FSK), and orthogonal frequency division multiplexing (OFDM).

95. The network device according to claim 93 or 94, wherein the target modulation manner used by the WUS comprises one of: binary phase shift keying (BPSK), quadrature phase shift keying (QPSK).

96. The network device according to any one of claims 93 to 95, wherein the second communication unit is configured to receive second information transmitted by the terminal device, wherein the second information comprises capability information of the terminal device; the capability information of the terminal device comprises at least one of: a waveform supported by the terminal device, and a modulation manner supported by the terminal device.

97. The network device according to any one of claims 75 to 96, wherein the second communication unit is configured to transmit third information to the terminal device, wherein the third information comprises measurement configuration information;
wherein the measurement configuration information is used to configure a first component of the terminal device to perform measuring on a reference signal.

98. The network device according to claim 97, wherein the measurement configuration information comprises at least one of:
configuration information of a reference signal of a serving cell; and
configuration information of a reference signal of a neighboring cell.

99. A terminal device, comprising: a processor and a memory, wherein the memory is configured to store a computer program, the processor is configured to invoke and execute the computer program stored in the memory, to cause the terminal device to perform the method according to any one of claims 1 to 25.

100. A network device, comprising: a processor and a memory, wherein the memory is configured to store a computer program, the processor is configured to invoke and execute the computer program stored in the memory, to cause the terminal device to perform the method according to any one of claims 26 to 49.

101. A chip, comprising: a processor, configured to invoke and execute a computer program from a memory, to cause a device equipped with the chip to perform the method according to any one of claims 1 to 25 or claims 26 to 49.

102. A computer-readable storage medium, for storing a computer program, wherein the computer program, when being executed by a device, causes the device to perform the method according to any one of claims 1 to 25 or claims 26 to 49.

103. A computer program product, comprising a computer program instruction, wherein the computer program instruction causes a computer to perform the method according to any one of claims 1 to 25 or claims 26 to 49.

104. A computer program, wherein the computer program causes a computer to perform the method according to any one of claims 1 to 25 or claims 26 to 49.
